(19) Europäisches Patentamt / European Patent Office / Office européen des brevets

(11) EP 4 026 620 A1

(12) EUROPEAN PATENT APPLICATION

(43) Date of publication:
13.07.2022 Bulletin 2022/28

(21) Application number: 21151244.7

(22) Date of filing: 12.01.2021

(51) International Patent Classification (IPC):
*B03D 1/008* (2006.01) *B03D 1/01* (2006.01)
*B03D 1/016* (2006.01)

(52) Cooperative Patent Classification (CPC):
**B03D 1/01; B03D 1/008; B03D 1/016;**
B03D 2201/02; B03D 2203/04

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **BASF SE**
**67056 Ludwigshafen am Rhein (DE)**

(72) Inventors:
- **BUDEMBERG, Gabriela**
  **12335-010 Jacarei (BR)**
- **MICHAILOVSKI, Alexej**
  **67056 Ludwigshafen (DE)**
- **SOARES BRAGA, Andre**
  **12335-010 Jacarei (BR)**
- **SOBOTKA, Bettina**
  **68623 Lampertheim (DE)**
- **MASI NETO, Dorival de**
  **04794-000 Sao Paulo (BR)**

(74) Representative: **BASF IP Association**
**BASF SE**
**GBI-C006**
**67056 Ludwigshafen (DE)**

# (54) METHOD FOR FLOTATION OF A SILICATE-CONTAINING IRON ORE

(57) The invention relates to a method for manufacturing a concentrate enriched in iron mineral content from an ore, which contains an iron mineral and silicate, by a reverse flotation, which method comprises the step of (c) adding a collector composition comprising
(i) an amidoamine, which contains a compound of formula I

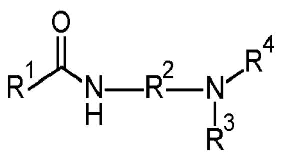
(I),

or a salt of a protonated compound of formula I and an anion, and
(ii) an alkyl polyglycoside, which contains a compound of formula II

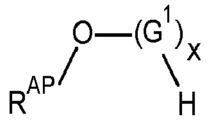
(II),

wherein
$R^{AP}$ is a linear or branched C6-C22 alkyl or a linear C6-C22 alkenyl,
$G^1$ is a monosaccharide residue having 5 or 6 carbon atoms,
x is an average value from 1 to 10,
to a prepared aqueous pulp of the ore and optionally one or more flotation auxiliary to obtain an aqueous mixture. Furthermore, the use of the collector composition as a flotation collector is described and the collector composition itself.

EP 4 026 620 A1

## Description

The present invention relates to a method for manufacturing a concentrate enriched in iron mineral content from an ore, which contains an iron mineral and silicate, by a reverse flotation using a collector composition comprising an amidoamine and an alkyl polyglycoside. A further embodiment is a use of the collector composition as a flotation collector. Furthermore, an embodiment is the collector composition itself.

A typical iron ore beneficiation process requires a flotation stage to remove silica ($SiO_2$) from the valuable iron mineral, e.g. oxides like hematite or magnetite, and thus to obtain a high-grade iron mineral concentrate. A high-grade iron mineral concentrate allows to make high quality steel. Removal of $SiO_2$ from different ores by froth flotation in combination with hydrophobic amines is a well-known process. Negatively charged silicate particles can be hydrophobized using suitable amines. Injection of air in a flotation cell leads to formation of hydrophobic gas bubbles, which can transport the hydrophobized silicate particles to the top of the flotation cell. The formed froth, which can be stabilized by a suitable chemical acting as a froth regulator, contains the hydrophobized silicate particles. Finally, the froth will be removed from the top and the enriched mineral is left at the bottom of the flotation cell.

US 2278060 A relates to a use of reaction products of higher fatty acids or esters and polyamines represented by the general formula $H_2N-(C_nH_{2n}-NH-)_x-C_mH_{2m}-NH_2$ for flotation of acidic ore material. In an example, a sample of magnetic separation plant tailings with about 23% Fe and consisting of magnetite, limonite and quartz is floated with the acetate of the reaction product of mixed polyethylene polyamines and coconut oil and a higher alcohol as a frother for flotation of silica from an iron ore.

US 4301004 A relates to a beneficiation of phosphate ore by the flotation of siliceous material. The utilization of a condensate of N-aminoethylpiperazine with a fatty acid or fatty acid ester improves the separation of phosphate from silica. This improvement is especially great in the presence of a co-collector consisting of a polyethylenepolyamine condensed with a fatty acid.

DE 19703360 A1 relates to the use of alkyl polyglycosides for deinking of recovered paper. The alkyl polyglycoside is a formula I $R(G)_x$ (I), wherein R is a linear saturated alkyl with 8 to 22 carbon atoms and $(G)_x$ is a glycoside part or oligoglycoside part with a degree of polymerization x from 1 to 10. The examples show a flotation of an aqueous paper pulp with an alkyl polyglycoside based on a native C8-C10 fatty alcohol, an alkyl polyglycoside based on a native C12-C14 fatty alcohol or a combination of the alkyl polyglycoside based on a native C12-C14 fatty alcohol with an ethoxylated polyol.

WO 2011-083136 A1 relates to a flotation process for recovering feldspar from a feldspar containing feed material, comprising the following steps: (1 ) forming an aqueous suspension of a feldspar containing feed material, in the absence of hydrofluoric acid, wherein the suspension comprises from 0.004 to 0.3 wt.% of a flotation reagent comprising: (a) one or more amines, containing at least one aliphatic hydrocarbon chain, linear or branched, saturated or unsaturated, comprising 8 to 50 carbon atoms, or a salt thereof; and (b) one or more primary, secondary or tertiary alcohols, containing at least one aliphatic hydrocarbon chain, linear or branched, saturated or unsaturated, comprising 8 to 50 carbon atoms; the ratio of (a) to (b) ranging from 500:1 to 1 :40 by weight; (2) agitating the obtained suspension to produce a feldspar containing fraction, and (3) separating the feldspar containing fraction.

US 2014-048454 A1 relates to fatty amidoamine collectors for the beneficiation by flotation of aqueous suspensions of ores, the use of said fatty amidoamine collectors in flotation processes for the beneficiation of ores, more particularly in reverse flotation processes for the beneficiation of silicates containing-ore. The amidoamine collector is at least one compound of formula 1

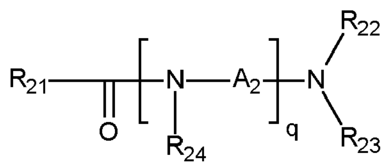

(1)

.

In its examples, the following amidoamine collectors are employed for an inverse flotation of calcium carbonate at a neutral pH: rapseed oil, N-(3-(dimethylaminopropyl)amide (CAS-No. 85408-42-0); tall oil, N-(3-(dimethylaminopropyl)amide (CAS-No. 68650-79-3) and fish oil, N-(3-(dimethylaminopropyl)amide (CAS-No. 97552-95-9). In some examples, the amidoamine is combined with a further cationic collector, i.e. N, N',N'-trihydroxyethyl N-tallow propylene diamine (CAS-No. 61790-85-0). In one example, terpineol is added as a well-known foamer. In its general specification, a combination of the amidoamine with a second cationic collector, i.e. a fatty alkoxylated polyamine of formula 2

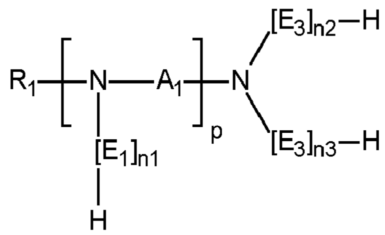

(2)

.

is disclosed.

US 2014-048453 A1 relates to fatty alkoxylated polyamine collectors for the beneficiation by flotation of aqueous suspensions of ores, the use of said fatty alkoxylated polyamine collectors in flotation processes for the beneficiation of ores, more particularly in reverse flotation processes for the beneficiation of silicates containing-ores. The fatty alkoxylated polyamine collector is of formula 1

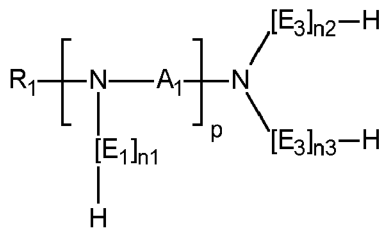

(1)

.

In its examples, the following amidoamine collector is employed for an inverse flotation of calcium carbonate at a neutral pH: rapseed oil, N-(3-(dimethylaminopropyl)amide (CAS-No. 85408-42-0). This amidoamine collector is also employed in combination with N,N',N'-trihydroxyethyl N-tallow propylene diamine (CAS-No. 61790-85-0). In its general specification, a combination of the fatty alkoxylated polyamine with a second cationic collector, i.e. an amidoamine of formula 2

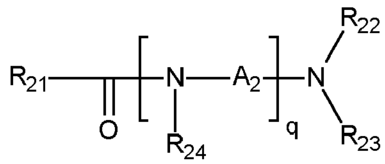

(2)

.

is disclosed.

US 2014-144290 A1 relates to collector compositions and methods for making and using them. The collector composition includes one or more amidoamines of formula I

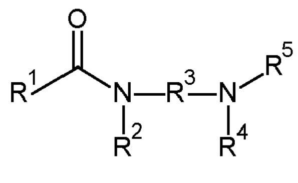

(I)

and one or more etheramines having formulae II or III

$R^6$-O-$R^7$-$NH_2$ (II)

$R^8$-O-$R^9$-NH-$R^{10}$-$NH_2$ (III).

A liquid suspension or slurry comprising one or more particulates can be contacted with the collector to produce a treated mixture. A product can be recovered from the treated mixture that includes a purified liquid having a reduced concentration of the particulates relative to the treated mixture, a purified particulate product having a reduced concentration of liquid relative to the treated mixture, or both. In its examples, the inverse flotation of an iron ore at a pH of 10.5 with removal of $SiO_2$ via the froth is shown inter alia with tall oil fatty acid 1,3-diamine pentane alone as well as in combination with an etheramine. Furthermore, a tall oil fatty acid diethylenetriamine amide is shown alone as well as in combination with an etheramine.

US 2015-0096925 A1 relates to collector compositions and methods for making and using same to purify one or more crude materials. The collector composition can include one or more amidoamines having the formula I

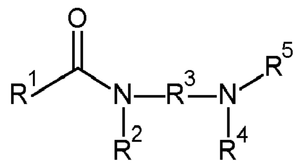

(I)

and one or more amines having the formula IV

$R^6$-$NH_2$ (IV),

where a weight ratio of the amidoamine to the amine can be about 99:1 to about 1:99. In its example 1, a coconut fatty acid diethylenetriamine amidoamine neutralized with glacial acetic acid and a BTGE frother are used in an inverse flotation of a phosphate ore for removal of silica at a neutral pH. In its example 2, a coconut fatty oil diethylenetriamine amidoamine neutralized with glacial acetic acid and a BTGE frother are used in an inverse flotation of a phosphate ore for removal of silica at a neutral pH. In its example 3, a tall oil fatty acid diethylenetriamine neutralized with glacial acetic acid and a BTGE frother are used for an inverse flotation of a phosphate ore for removal of silica at a neutral pH. Other amidoamines similarly employed are lauric acid diethylenetriamine amidoamine and a rosin acid tetraethylenepentamine amidoamine. Some examples provide also a combination of an amidoamine with an amine such as an etheramine composed of 95 wt.% of 3-(8-methylnonoxy)propan-1-amine and 3 wt.% of 8-methylnonan-1-ol, such as cocoamine or such as dodecylamine.

WO 2016/041916 A1 relates to a use of branched fatty alcohol based compounds selected from the group of fatty alcohols with 12-16 carbon atoms having a degree of branching of 1-3, and their alkoxylates with a degree of ethoxylation of up to 3, as secondary collectors for the froth flotation of non-sulfide ores, in combination with a primary collector selected from the group of amphoteric and anionic surface active compounds. In the examples, fatty alcohol ethoxylates based on an alcohol with a degree of branching of 3 and 2.2 are performing superior to fatty alcohol ethoxylates based on an alcohol with a degree of branching of 0.6 or 0 at the flotation of an apatite-containing ore in combination with an amphoteric collector, i.e. N-[2-hydroxy-3-(C12-C16-alkoxy)propyl]-N-methyl glycinate, an a frother.

WO 2016/065189 A1 relates to compositions, aqueous mixtures that include the composition and an ore, and methods for making and using same. The composition can include an organic acid and a polyamidoamine. The polyamidoamine can have the chemical formula A

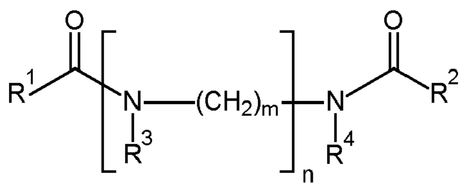

(A)

In the chemical formula A, $R^1$ and $R^2$ can independently be a saturated or unsaturated, substituted or unsubstituted, linear or branched, cyclic, heterocyclic, or aromatic hydrocarbyl group, $R^3$ and $R^4$ can independently be hydrogen or a saturated or unsaturated, substituted or unsubstituted, linear or branched, cyclic, heterocyclic or aromatic hydrocarbyl group, each m can be an integer of 1 to 5 and n can be an integer of 2 to 8. The aqueous mixture can include an ore, water and the composition.

CN 106622677 A relates to a mining frother for rare earth ore flotation and a preparation method thereof. The mining frother for rare earth ore flotation is prepared from, by weight, 40-50 parts of sodium fatty acid methyl ester sulfonate, 10-15 parts of sodium dodecyl sulfate, 10-15 parts of sodium alpha-olefin sulfonate, 10-15 parts of polyvinyl alcohol, 10-15 parts of alkyl polyglucoside, 10-15 parts of N-lauroyl glutamate diester, 10-15 parts of glycerol, 5-10 parts of sodium lauroyl sarcosine, 5-10 parts of sodium lauroyl hydrolyzed silk, 5-10 parts of aluminum potassium sulfate, 5-10 parts of guar gum, 2-5 parts of sodium alginate and 5-10 parts of froth stabilizer.

WO 2019/113082 A1 relates to a collector composition and methods for making and using the same are provided. The collector is synthesized from one or more tall oil fatty acids and one or more polyamines. A liquid suspension or slurry comprising one or more particulates may be contacted with the collector to produce a treated mixture. The collector contains sub-components with amidoamine and imidazoline functionalities which provide superior recovery of desired minerals over known methods. In its examples, oleic acid is condensed with triethylenetetramine. The reaction products are employed for flotation of a copper ore alone, in combination with a frother, i.e. Dowfroth 250 and/or methyl isobutyl carbinol, in combination with sodium isopropyl xanthate or in combination with the frother and sodium isopropyl xanthate.

International application No. PCT/EP2020/069040 relates to a method for manufacturing a concentrate enriched in iron mineral content from an ore, which contains an iron mineral and silicate, by a reverse flotation, which method comprises the step of

(c) adding a compound of formula I

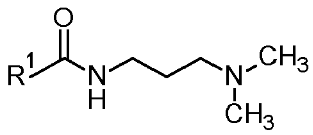

(I)

wherein $R^1$ is a linear $C_{17}$ alkenyl, a linear $C_{17}$ alkyl or a linear $C_{15}$ alkyl, or a salt of a protonated compound of formula I and an anion,

to a prepared aqueous pulp of the ore and optionally one or more flotation auxiliaries to obtain an aqueous mixture. In its examples, the amidoamine employed for flotation of a hematite ore is a reaction product from the condensation of soy oil fatty acid and N,N-dimethylproapne-1,3-diamine. In its general specification, a co-collector is proposed as one of several flotation auxiliaries. A co-collector, which is cationic, non-ionic or anionic is proposed. A non-ionic co-collector is for example $C_9$-$C_{15}$ alkyl alcohol, which is branched, or ethoxylated $C_9$-$C_{15}$ alkyl alcohol, which is branched and ethoxylated with 2 to 4 mole ethylene oxide.

There is still a need for improved methods in inverse flotation of ores containing iron mineral and silicate. Especially the quality of ores has been decreasing. With higher $SiO_2$ content in the ore, a selective removal of silicate is more difficult than in the past with ores of a lower $SiO_2$ content. Furthermore, not only a $SiO_2$ content is higher, but other contaminants are also present like kaolinite and dolomite, which makes a flotation process more difficult. On one side, a loss of iron mineral in the flotation process should be avoided, i.e. a high recovery, and on the other side, $SiO_2$ content should be decreased in a concentrate enriched in iron mineral content to a low level, i.e. selectivity. Especially for direct reduction processes using the concentrate, a low

$SiO_2$ content is desirable. Typically, a mine as an ore processing site will set a maximum level of residual $SiO_2$ content that is allowed to remain in the concentrate at the end of the flotation process. This may for instance be 2.5 wt.% (% by weight), especially 2.0 wt.%. The target is generally to at least achieve this maximum silica level without significantly losing any of the iron mineral content. A better recovery in combination with a comparable or a better selectivity reduces iron mineral losses in the tailings and leads to economic benefits.

It is an object of the present invention to provide a method for manufacturing a concentrate enriched in iron mineral content with a high recovery of iron mineral from the applied ore and a low content of $SiO_2$ from the applied ore. Furthermore, it is attractive if the overall amount of employed collector can be reduced. At the same time, it is an advantage if a material applied in the method can economically be manufactured in a chemically relatively simple reaction and the reaction product needs no or essentially no purification steps.

The object is achieved, according to the invention, by a method for manufacturing a concentrate enriched in iron mineral content from an ore, which contains an iron mineral and silicate, by a reverse flotation, which method comprises the step of

(c) adding a collector composition comprising

(i) an amidoamine, which contains a compound of formula I

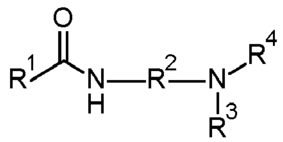 (I),

wherein

$R^1$ is a linear or branched $C_7$-$C_{19}$ alkyl or a linear $C_7$-$C_{19}$ alkenyl,
$R^2$ is a linear or branched $C_2$-$C_6$ alkylene,
$R^3$ and $R^4$ are independently from each other H, $C_1$-$C_2$ alkyl or a substituent of formula I-S

$$*\text{-}[\text{-}(CH_2\text{-})_p\text{-}NH\text{-}]_q\text{-}(\text{-}CH_2\text{-})_p\text{-}NH_2 \qquad \text{(I-S)},$$

wherein

p is 2, 3 or 4,
q is 0, 1, 2 or 3, and
* represents the connecting site of the substituent, or
a salt of a protonated compound of formula I and an anion, and

(ii) an alkyl polyglycoside, which contains a compound of formula II

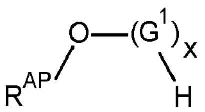 (II),

wherein

$R^{AP}$ is a linear or branched $C_6$-$C_{22}$ alkyl or a linear $C_6$-$C_{22}$ alkenyl,
$G^1$ is a monosaccharide residue having 5 or 6 carbon atoms,
x is an average value from 1 to 10,

to a prepared aqueous pulp of the ore and optionally one or more flotation auxiliary to obtain an aqueous mixture.

The method is characterized by that the collector composition comprises
(ii) an alkyl polyglycoside, which contains a compound of formula II.

Preferably, the method for manufacturing a concentrate enriched in iron mineral content from an ore, which contains an iron mineral and silicate, comprises the steps of

(a) providing the ore, which contains an iron mineral and silicate,
(b) preparing from the provided ore by addition of water and optionally one or more flotation auxiliaries an aqueous pulp,
(c) adding the collector composition to the prepared aqueous pulp of the ore and optionally one or more flotation auxiliaries to obtain an aqueous mixture,
(d) aerating the aqueous mixture in a flotation cell to generate a froth, which is enriched in silicate content, and removing the generated froth from the flotation cell,
(e) obtaining from the flotation cell the concentrate enriched in iron mineral content.

The steps (a), (b), (c), (d) and (e) describe more detailed the reverse flotation.

The ore, which contains an iron mineral and silicate ($SiO_2$), is for example from a magmatic deposit or from a sedimentary deposit. Igneous ores (e.g. Kiruna type) always contain iron as magnetite ($Fe_3O_4$), while sedimentary (banded iron formations = BIF) ores may also contain iron mainly as magnetite, mainly as hematite, or as a mixture of both. Where iron is mainly contained as magnetite, crushing and wet grinding are often followed by a magnetic separation

and sometimes the magnetic concentrate is further treated by flotation. Where iron is mainly or to a significant degree contained as hematite and the iron content of the ore itself is below 50-55 wt.%, the ore is often crushed, wet ground and subjected to flotation. Itabirite is a specific type of sedimentary iron ore, frequently found in the Iron Quadrangle of Brazil but also encountered and exploited in other locations worldwide. The step (a) of providing an ore comprises for example also a crushing or a grinding respectively milling of the ore. In case of an ore from a magmatic deposit, the step of providing the ore comprises for example also a crushing of the ore, a grinding respectively milling of the ore and a removal of magnetic parts by magnetic separation. In case of an ore from a sedimentary deposit, the step of providing the ore comprises for example a crushing of the ore, particularly a crushing of the ore and a wet grinding of the ore. Preferably, the step (a) of providing of the ore results in ore particles, which have a particle size allowing 60 to 100 wt.% (% by weight) of the particles based on the overall weight of the particles to pass a 100 $\mu$m steel mesh sieve as measured by standard dry sieving.

The ore contains for example 15 to 80 wt.% of silicate based on the weight of the ore, particularly 20 to 75 wt.%, more particularly 25 to 75 wt.%, very particularly 30 to 55 wt.% and especially 30 to 40 wt.%. The calculation is performed on basis of dry ore.

Preferably, the iron mineral consists out of 90 to 100 wt.% by weight of iron oxide based on all iron mineral in the ore. Very preferably, the iron mineral consists out of at least 97 to 100 wt.% of iron oxide, particularly preferably out of 99 to 100 wt.%. Typical iron oxides are hematite ($Fe_2O_3$ with 69.9 wt.% of iron content based on the weight of $Fe_2O_3$), magnetite ($Fe_3O_4$ with 72.4 wt.% iron content based on the weight of $Fe_3O_4$), goethite (alpha-Fe(O)OH with 62.9 wt.% iron content based on the weight of alpha-Fe(O)OH) or a mixture thereof, particularly the iron oxides are hematite, magnetite or a mixture of both. The weight of iron content is similar to a weight content of Fe atoms.

A typical ore comprises between 30 to 75 wt.% of hematite and 20 to 50 wt.% of silica, particularly between 30 to 70 wt.% of hematite and 20 to 55 wt.% of silica, more particularly 35 to 60 wt.% of hematite and 20 to 50 wt.% of silica. The calculation is performed on basis of dry ore. The ore is preferably an itabirite type iron ore.

Preferred is an ore, which comprises iron mineral, wherein more than 50 wt.% of the comprised iron mineral is an iron oxide, which is hematite. Very preferred, more than 70 to 100 wt.% is an iron oxide, which is hematite.

The collector composition acts in the method as a collector for froth flotation. Some might call the amidoamine a primary collector and the alkyl polyglycoside a secondary collector, wherein the alkly polyglycoside supports or boosts the performance of the amidoamine.

Linear alkyl or linear alkenyl herein means that the aliphatic alkyl or the aliphatic alkenyl possesses only carbon atoms, which are covalently bound to one other carbon atom or two other carbon atoms.

Branched alkyl herein means that the alkyl possesses at least one carbon atom, which is covalently bound to three different carbon atoms or is covalently bound to four different carbon atoms.

Mono-branched alkyl herein means that the alkyl possesses only one carbon atom, which is covalently bound to three other carbon atoms, and is free of a carbon atom, which is covalently bound to four other carbon atoms.

Linear alkylene herein means that the aliphatic alkylene possesses only carbon atoms, which are covalently bound to one other carbon atom or two other carbon atoms.

Branched alkylene herein means that the alkylene possesses at least one carbon atom, which is covalently bound to three different carbon atoms or is covalently bound to four different carbon atoms.

Mono-branched alkylene herein means that the alkylene possesses only one carbon atom, which is covalently bound to three other carbon atoms, and is free of a carbon atom, which is covalently bound to four other carbon atoms.

An average degree of branching of a moiety, e.g. an alkyl or an alkylene, is herein defined as the adjusted number of all branched moieties divided by the sum of the number of all branched moieties and the number of all linear moieties. The number of all branched moieties is adjusted by counting mono-branched moieties once, double-branched moieties twice, triple-branched moieties three-times etc. Whether a moiety is mono-branched, double-branched, triple-branched is calculated for a moiety by counting a carbon atom connected covalently to 3 other carbon atoms with 1 and a carbon atom connected covalently to 4 other carbon atoms with 2. For example, a 2-methyl-dodec-1yl is mono-branched, a 2,4-dimethyl-undec-1-yl is double-branched, a 10,10-dimethyl-undecy-1-yl is double branched and a 2,9,9-trimethyl-dec-1-yl is triple-branched. The value of an average degree of branching is between 0 in case all moieties are linear and 1 in case of all moieties are mono-branched. In case, all moieties are the same, the average degree of branching of a moiety an integer. In case of two or more different moieties, the average degree of branching is between 0 and an upper limit. The upper limit goes until the maximum integer possible for a given number of carbon atoms.

Unsubstituted herein means that an alkyl or an alkylene is free of substituents different to a carbon atom or a hydrogen atom. Accordingly, the unsubstituted alkyl or the unsubstituted alkylene is composed only of carbon atoms and hydrogen atoms. The unsubstituted alkyl or the unsubsituted alkylene can still be branched.

The amidoamine is free of aromatic substituents.

A linear $C_7$-$C_{19}$ alkyl is for example n-hept-1-yl, n-oct-1-yl, n-non-1-yl, n-dec-1-yl, n-undec-1-yl, n-dodec-1-yl, n-tridec-1-yl, n-tetradec-1-yl, n-pentadec-1-yl, n-hexadec-1-yl, n-heptadec-1-yl, n-octadec-1-yl, n-nonadecy-1-yl or a mixture thereof.

A branched $C_7$-$C_{19}$ alkyl is for example iso-heptyl, particularly 1-methyl-hex-1-yl, 5-methyl-hex-1-yl or 1-ethyl-pent-1-yl, iso-octyl, particularly 1-methyl-hept-1-yl or 6-methyl-hept-1-yl, iso-nonyl, particularly 1-methyl-oct-1-yl or 7-methyl-oct-1-yl, iso-decyl, particularly 1-methyl-non-1-yl, 8-methyl-non-1-yl or 1-propyl-hex-1-yl, iso-undecyl, particularly 1-methyl-dec-1-yl, 9-methyl-dec-1-yl, 3,7-dimethyl-non-1-yl, 1,5,7-trimethyl-oct-1-yl, 1-ethyl-non-1-yl, 1-ethyl-2-methyl-oct-1-yl, 1,3-diethyl-hept-1-yl or 1-butyl-hept-1-yl, iso-dodecyl, particularly 1-methyl-undec-1-yl, 10-methyl-undec-1-yl, 1,3,7-trimethyl-non-1-yl, 1,3,5,7-tetramethyl-oct-1-yl, 1-ethyl-dec-1-yl, 1,1-diethyl-oct-1-yl or 1-propyl-non-1-yl, iso-tridecyl, particularly 1-methyl-dodec-1-yl, 11-methyl-dodec-1-yl, 1,5,9-trimethyl-dec-1-yl, 1,3,5,7-tetramethyl-non-1-yl, 1-ethyl-undec-1-yl, 6-ethyl1-methyl-dec-1-yl, 1-(1-methylpropyl)non-1-yl, 1-butyl-1-ethyl-5-methyl-hex-1-yl, 1-pentyl-oct-1-yl or 1-hexyl-hept-1-yl, iso-tetradecyl, particularly 1-methyl-tridec-1-yl, 12-methyl-tridec-1-yl, 2,6,10-trimethyl-undec-1-yl, 1-propyl-undec-1-yl or 2-hexyl-oct-1-yl, iso-pentadecyl, particularly 1-methyl-tetradec-1-yl, 13-methyl-tetradec-1-yl, 1,3,7-trimethyl-dodec-1-yl, 3,7,11-trimethyl-do-dec-1-yl, 1-ethyl-tridec-1-yl, 1-butyl-undec-1-yl or 1-hexyl-non-1-yl, iso-hexadecyl, particularly 1-methyl-pentadec-1-yl or 14-methyl-pentadec-1-yl, iso-heptadecyl, particularly 1-methyl-hexadec-1-yl or 15-methyl-hexadec-1-yl, iso-octadecyl, particularly 1-methyl-heptadec-1-yl or 16-methyl-heptadec-1-yl, iso-nonadecyl, particularly 1-methyloctadec-1-yl, 17-methyl-octadec-1-yl or 1-octyl-undec-1-yl, or a mixture thereof.

A linear $C_7$-$C_{19}$ alkenyl is for example n-dec-9-en-1-yl, a $C_{17}$ alkenyl, particularly (8Z)-heptadec-8-en-1-yl, (8E)-heptadec-8-en-1-yl, (8Z,11Z)-heptadec-8,11-dien-1-yl or (8Z,11Z,14Z)-heptadec-8,11,14-trien-1-yl, or a mixture thereof.

$R^1$ is preferably a linear or branched $C_{11}$-$C_{19}$ alkyl or a linear $C_{11}$-$C_{19}$ alkenyl. More preferably, $R^1$ is a linear or branched $C_{11}$-$C_{17}$ alkyl or a linear $C_{11}$-$C_{17}$ alkenyl. Very preferably, $R^1$ is a linear $C_{15}$-$C_{17}$ alkyl or a linear $C_{15}$-$C_{17}$ alkenyl. Particularly, $R^1$ is a linear $C_{15}$-$C_{17}$ alkyl or a linear $C_{17}$ alkenyl.

Preferably, $R^1$ is a linear or branched unsubstituted $C_7$-$C_{19}$ alkyl or a linear unsubstituted $C_7$-$C_{19}$ alkenyl. More preferably, $R^1$ is a linear or branched unsubstituted $C_{11}$-$C_{19}$ alkyl or a linear unsubstituted $C_{11}$-$C_{19}$ alkenyl. Very preferably, $R^1$ is a linear or branched unsubstituted $C_{11}$-$C_{17}$ alkyl or a linear unsubstituted $C_{11}$-$C_{17}$ alkenyl. Very preferably, $R^1$ is a linear unsubstituted $C_{15}$-$C_{17}$ alkyl or a linear unsubstituted $C_{15}$-$C_{17}$ alkenyl. Particularly, $R^1$ is a linear unsubstituted $C_{15}$-$C_{17}$ alkyl or a linear unsubstituted $C_{17}$ alkenyl.

A linear or branched $C_2$-$C_6$ alkylene is for example ethylene, prop-1,3-diyl, 1-methyl-ethylene, but-1,4-diyl, 1-methylprop-1,3-diyl, 2-methyl-1,3-diyl, 1-ethylethylene, pent-1,5-diyl, 1-methyl-but-1,4-diyl, 2-methyl-but-1,4-diyl, 1,2-dimethyl-prop-1,3-diyl, 1-ethyl-prop-1,3-diyl, 2-ethyl-prop-1,3-diyl, hex-1,6-diyl, 1-methylpent-1,5-diyl, 2-methylpent-1,5-diyl, 3-methylpent-1,5-diyl, 1-ethyl-but-1,4-diyl, 2-ethyl-but-1,4-diyl or a mixture thereof.

$R^2$ is preferably a linear or branched $C_2$-$C_5$ alkylene. More preferably, $R_2$ is a linear or mono-branched $C_2$-$C_5$ alkylene. Very preferably, $R^2$ is a linear or mono-branched $C_2$-$C_3$ alkylene or a linear or mono-branched $C_5$ alkylene. Particularly, $R^2$ is a linear $C_2$ alkylene or a mono-branched $C_5$ alkylene.

$R^2$ is preferably a linear or branched unsubstituted $C_2$-$C_6$ alkylene. More preferably, $R^2$ is a linear or branched unsubstituted $C_2$-$C_5$ alkylene. Very preferably, $R_2$ is a linear or mono-branched unsubstituted $C_2$-$C_5$ alkylene. Very preferably, $R^2$ is a linear or mono-branched unsubstituted $C_2$-$C_3$ alkylene or a linear or mono-branched unsubstituted $C_5$ alkylene. Particularly, $R^2$ is a linear unsubstituted $C_2$ alkylene or a mono-branched unsubstituted $C_5$ alkylene.

$C_1$-$C_2$ alkyl is methyl or ethyl.

p is preferably 2 or 3. More preferably, p is 2.

q is preferably 0, 1 or 2. More preferably, q is 0 or 1. Very preferably, q is 0.

$R^3$ is preferably H, methyl or ethyl. More preferably, $R^3$ is H or methyl. Very preferably, $R^3$ is H.

Preferred is a method, wherein $R^3$ is H or $C_1$-$C_2$ alkyl.

$R^4$ is preferably H, $C_1$-$C_2$ alkyl or a substituent of formula I-S, wherein p is 2 or 3 and q is 0, 1, 2 or 3. More preferably, $R^4$ is H, $C_1$-$C_2$ alkyl or a substituent of formula I-S, wherein p is 2 or 3 and q is 0, 1 or 2. Very preferably, $R^4$ is H, methyl or a substituent of formula I-S, wherein p is 2 or 3 and q is 0, 1 or 2. Particularly, $R^4$ is H, methyl or a substituent of formula I-S, wherein p is 2 and q is 0, 1 or 2. More particularly, $R^4$ is H, methyl or a substituent of formula I-S, wherein p is 2 and q is 0 or 1. Very particularly, $R^4$ is H or methyl.

Preferred is a method, wherein p is 2 and q is 1, 2 or 3.

At the collector composition, the amidoamine can contain different compounds of formula I, i.e. two or more different compounds of formula I, or salts of the protonated different compounds of formula I and an anion. The different compounds of formula I can differ by a different substituent $R^1$. The different compounds of formula I can differ by different substituents $R^2$, $R^3$ or $R^4$. Preferably, the different compounds of formula I differ by different substituents $R^1$. More preferably, the different compounds of formula I differ by different substituents $R^1$ and one of the different substituents $R^1$ is a linear $C_{17}$ alkenyl. Very preferably, one of the different substituents $R^1$ is a linear $C_{17}$ alkenyl and one of the different substituents $R^1$ is a linear pentadecyl. Particularly, one of the different substituents $R^1$ is (8Z)-heptadec-8-enyl and one of the different substituents $R^1$ is n-pentadec-1-yl. More particularly, one of the different substituents (8Z)-heptadec-8-en-1-yl, one of the different substituents $R^1$ is a n-pentadec-1-yl and one of the different substituents $R^1$ is (8Z,11Z)-heptadec-8,11-dienyl.

Preferred is a method, wherein

(i) the amidoamine contains different compounds of formula I, or salts of the protonated different compounds of formula I and an anion.

The amidoamine containing a compound of formula I is preferably obtainable by condensation of a fatty acid of formula I-FA with an amine of formula I-A

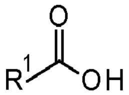
(I-FA)

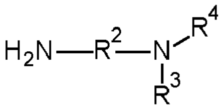
(I-A),

wherein $R^1$, $R^2$, $R^3$, $R^4$ and formula I-S, p, q and * are defined as above. Condensation means in case of a fatty acid and an amine a removal of water, typically by heating the fatty acid and the amine at an elevated temperature and removal of water by distillation. Preferably, one mol of a fatty acid of formula I-FA is condensed with 0.8 to 1.5 mol of an amine of formula I-A. More preferably, one mol of a fatty acid of formula I-FA is condensed with 0.9 to 1.4 mol of an amine of formula I-A. Very preferably, one mol of a fatty acid of formula I-FA is condensed with 1 to 1.3 mol of an amine of formula I-A. In other words, there is very preferably one mol of a fatty acid of formula I-FA condensed with equimolar amounts or up to 0.3 mol excess of an amine of formula I-A. Preferably, the fatty acid of formula I-FA is from a natural source, which is a natural fat or an oil of plant or animal origin. More preferably, the fatty acid of formula I-FA is obtainable by hydrolysis of a glyceride, which originates from a natural source from a natural source, which is a natural fat or an oil of plant or animal origin.

It is assumed that in case of a suitable amine of formula I-A, an intramolecular condensation reaction can occur and leads to an equilibrium of an amidoamine of formula I and an intramolecularly cyclized molecule. A suitable amine of formula I-FA has a $R^2$, which is a $C_2$-$C_3$ alkylene and at least one of $R^3$ and $R^4$ are H. This allows with $R^2$ being a $C_2$ alkylene a formation of a five-membered ring, which is a dihydroimidazol derivative. This allows with $R^3$ being a $C_3$ alkylene a formation of a six-membered ring, which is a tetrahydropyrimidine derivative.

For example, a condensation product of N',N'-dimethylpropane-1,3-diamine with rapeseed-oil is known under CAS-No. 85408-42-0. A condensation product of N',N'-dimethylpropane-1,3-diamine with tall oil is known under CAS-No. 68650-79-3. A condensation product of N',N'-dimethylpropane-1,3-diamine with fish oil is known under CAS-No. 97552-95-9. A condensation product of N',N'-dimethylpropane-1,3-diamine (alternative name: 3-(dimethylamino)propylamine) with soy oil is known under CAS-No. 68188-30-7 and named in CAS registry as amides, soy, N-[3-(dimethylamino)propyl. Soy oil possesses distribution ranges of individual fatty acids, which is described in one literature for example as containing as major components around 8 to 14 mol% palmitic acid, around 1 to 6 mol% stearic acid, around 17 to 30 mol% oleic acid, around 48 to 59 mol% linoleic acid and around 4 to 11 mol% linolenic acid - all based on the overall molar amount of fatty acids, which is 100 mol%. It is also to be noted that soy oil is a natural product and the composition may slightly vary depending on the growth conditions and breed of the soy plant. For example, a specific distribution of major components of soy oil fatty acids is described in the mentioned literature as around 10 mol% palmitic acid, around 5 mol% stearic acid, around 21 mol% oleic acid, around 53 mol% linoleic acid and around 8 mol% linolenic acid - based on the overall molar amount of fatty acids, which is 100 mol%. The meaning of around in the two previous sentences refers also to the slight differences if one considers wt.% versus mol%. The molecular weight of the major components is not the same but also not too much different, hence in a first approximation, wt.% can be taken as mol% and vice versa. Soy oil fatty acids can be distilled, which might lead to changes versus the fatty acid distribution before distillation. The amidoamine obtained from a condensation of N',N'-dimethylpropane-1,3-diamine with palmitic acid is known under CAS-No. 39669-97-1, a chloride salt of the protonated amidoamine under CAS-No. 151190-60-2, a palmitate salt of the protonated amidoamine under CAS-No. 220820-88-2, an acetate salt of the protonated amidoamine under CAS-No. 83763-68-2. The amidoamine product obtained from a condensation of N',N'-dimethylpropane-1,3-diamine with stearic acid is known under CAS-No. 7651-02-7, a chloride salt of the protonated amidoamine under CAS-No. 83607-13-0, a stearate acid salt of the protonated amidoamine under CAS-No. 127358-77-4, an acetate salt of the protonated amidoamine under CAS-No. 13282-70-7. The amidoamine product obtained from a condensation of N',N'-dimethylpropane-1,3-diamine with oleic acid is known under CAS-No. 109-28-4, a bromide salt of the protonated amidoamine under CAS-No. 76959-11-0, an oleate salt of the protonated amidoamine under CAS-No. 70715-14-9, an acetate salt of the protonated amidoamine under CAS-No. 13282-68-3, a sulfate salt with two of the mono-protonated amidoamines under CAS-No. 1638206-65-1. The amidoamine product obtained from a condensation of N',N'-dimethylpropane-1,3-diamine with linoleic acid is known under CAS-No. 81613-56-1, a linoleate salt of the protonated amidoamine under CAS-No. 651294-42-7, a 2-hydroxypropionate salt of the protonated amidoamine under CAS-No. 187939-51-1. The amidoamine product obtained from a condensation of N',N'-dimethylpropane-1,3-diamine with linolenic acid is known under CAS-No. 122955-03-7.

Preferred is a method, wherein

(i) the amidoamine is obtainable by condensation of a fatty acid of formula I-FA with an amine of formula I-A

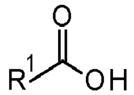 (I-FA)

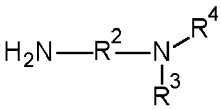 (I-A),

wherein $R^1$, $R^2$, $R^3$, $R^4$ and formula I-S, p, q and * are defined as above.

A compound of formula I, wherein $R^1$ is linear n-heptadec-1-yl, $R^2$ is prop-1,3-diyl and $R^3$ and $R^4$ are $C_1$ alkyl, is depicted below

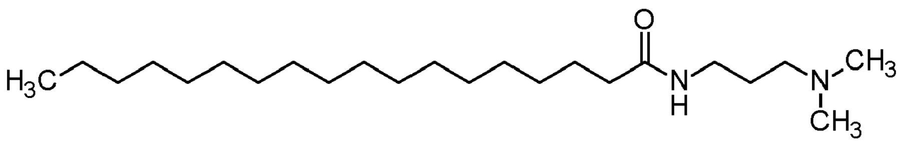,

and a chemical name is N-[3-(dimethylamino)propyl]octadecanamide.

A compound of formula I, wherein $R^1$ is n-pentadec-1-yl, $R^2$ is prop-1,3-diyl and $R^3$ and $R^4$ are $C_1$ alkyl, is depicted below

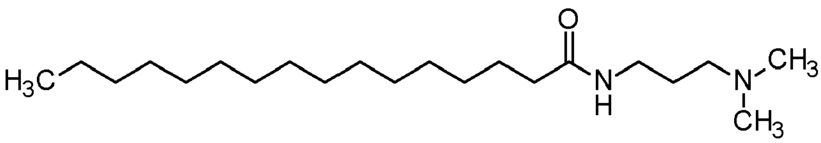,

and a chemical name is N-[3-(dimethylamino)propyl]hexadecanamide.

A compound of formula I, wherein $R^1$ is linear $C_{17}$ alkenyl, which is (8Z)-heptadec-8-en-1-yl, $R^2$ is prop-1,3-diyl and $R^3$ and $R^4$ are $C_1$ alkyl, is depicted below

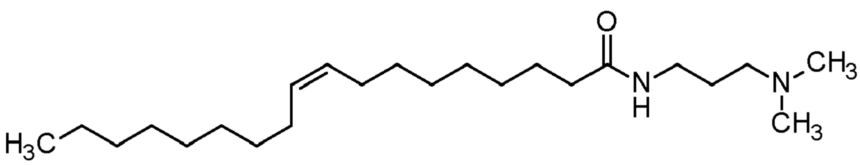,

and a chemical name is (Z)-N-[3-(dimethylamino)propyl]octadec-9-enamide.

A compound of formula I, wherein $R^1$ is linear $C_{17}$ alkenyl, which is (8Z,11Z)-heptadec-8,11-dien-1-yl, $R^2$ is prop-1,3-diyl and $R^3$ and $R^4$ are $C_1$ alkyl, is depicted below

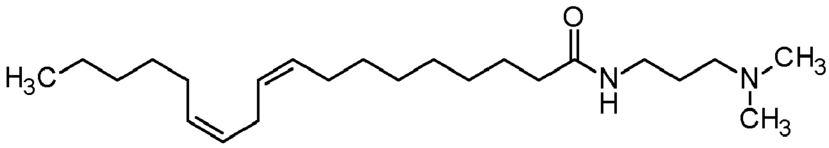

.

and a chemical name is (9Z,12Z)-N-[3-(dimethylamino)propyl]octadeca-9,12-dienamide.

A compound of formula I, wherein $R^1$ is linear $C_{17}$ alkenyl, which is (8Z,11Z,14Z)-heptadec-8,11,14-trien-1-yl, $R^2$ is prop-1,3-diyl and $R^3$ and $R^4$ are $C_1$ alkyl, is depicted below

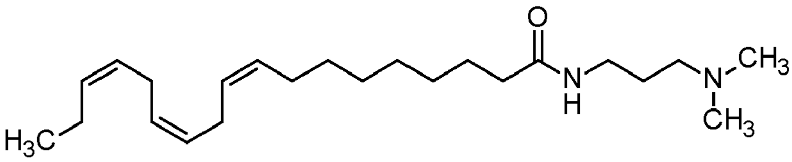

,

and a chemical name is (9Z,12Z,15Z)-N-[3-(dimethylamino)propyl]octadeca-9,12,15-trienamide.

A compound of formula I, wherein $R^1$ is linear $C_{17}$ alkenyl, which is (8Z)-heptadec-8-en-1-yl, $R^2$ is prop-1,3-diyl and $R^3$ and $R^4$ are H, is depicted below

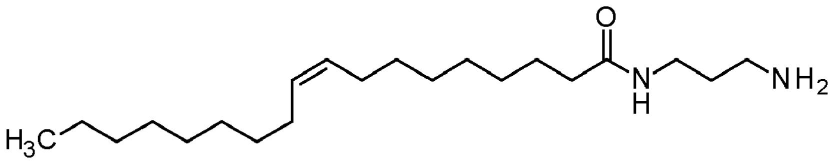

,

and a chemical name is (Z)-N-(3-aminopropyl)octadec-9-enamide.

A compound of formula I, wherein $R^1$ is linear $C_{17}$ alkenyl, which is (8Z)-heptadec-8-en-1-yl, $R^2$ is 1-ethyl-prop-1,3-diyl and $R^3$ and $R^4$ are H, is depicted below

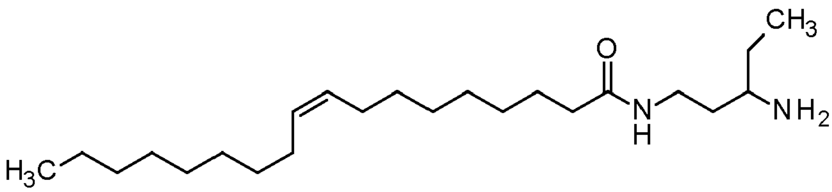

,

and a chemical name is (Z)-N-(3-aminopentyl)octadec-9-enamide.

A compound of formula I, wherein $R^1$ is linear $C_{17}$ alkenyl, which is (8Z)-heptadec-8-en-1-yl, $R^2$ is ethylene, $R^3$ is H, and $R^4$ is a formula I-S with p = 2 and q = 0, is depicted below

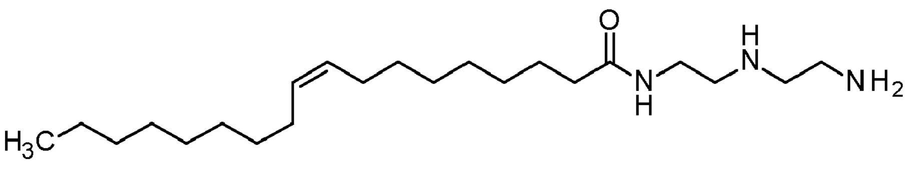

.

and a chemical name is (Z)-N-[2-(2-aminoethylamino)ethyl]octadec-9-enamide.

The anion is the deprotonated form of an acid A(-H)p, wherein -H represents an acidic proton and p the number of acidic protons of the acid A(-H)p. Depending on the acid strength of the acid A(-H)p, some acidic protons of the acid A(-H)p might not be deprotonated in a salt with a compound of formula I.

A salt of a mono-protonated compound of formula I and the anion is for example also expressed by formula I-t1-1+

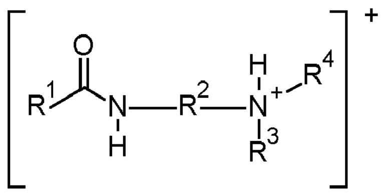 $(A^{y-})_{1/y}$ (I-t1-1+)

,

wherein A represents the anion, y is an integer, which is at least 1, and y represents the negative charge of the anion. y is not higher than p, which is the number of acidic protons of the acid A(-H)p. Preferred is an anion, which is a deprotonated acid A(-H)p, wherein p is 1, 2 or 3 and y is 1 for p =1, y is 1 or 2 for p = 2 and y is 1, 2 or 3 for p = 3. In case of $R^3$ and/or $R^4$ being independently from each other a substituent of formula I-S, the one or more nitrogen atoms of formula I-S are in an equilibrium with the nitrogen atom substituted by $R^2$, $R^3$ and $R^4$ for being protonated. This is well-known as tautomerism. In case of $R^3$ and/or $R^4$ being independently from each other a substituent of formula I-S, the compound of formula I can be twice protonated and carries two positive charges. Accordingly, the one or more nitrogen atoms of formula I-S and the nitrogen atom substituted by $R^2$, $R^3$ and $R^4$ are overall twice protonated and individually in an equilibrium for being protonated. In analogy, the compound of formula I can be protonated more than twice and up to the number of nitrogen atoms in the substituents of formula I-S plus one for the nitrogen atom substituted by $R^2$, $R^3$ and $R^4$. However, it is more economic and environmental beneficial if the compound of formula I is not protonated and thus less up to no anions are introduced by the compound of formula I into the method for manufacturing a concentrate. Preferably, the compound of formula I is protonated not more than three-times, twice or once, more preferably not more than twice or once, most preferably not more than once and particularly the compound of formula I is free from protonation respectively the compound of formula I is not a salt.

The anion is for example $C_1$-$C_{18}$ carboxylate, fluoride, chloride, bromide, iodide, sulfonate, hydrogensulfate, sulfate, dihydrogenphosphate, hydrogenphosphate, phosphate, nitrate, hydrofluorosilicate or fluorosilicate. $C_1$-$C_{18}$ carboxylate is for example an aliphatic or olefinic carboxylate, preferably an aliphatic $C_1$-$C_{13}$ carboxylate, very preferably an aliphatic $C_1$-$C_6$ carboxylate and especially formate, acetate or proprionate. Preferred is $C_1$-$C_{18}$ carboxylate, fluoride, chloride, sulfonate, hydrogensulfate, sulfate, dihydrogenphosphate, hydrogenphosphate, phosphate or nitrate. Very preferred is aliphatic or olefinic $C_1$-$C_{18}$ carboxylate, particularly preferred is formate, acetate or proprionate.

Preferred is a method, wherein the anion is $C_1$-$C_{18}$ carboxylate, fluoride, chloride, bromide, iodide, sulfonate, hydrogensulfate, sulfate, dihydrogenphosphate, hydrogenphosphate, phosphate, nitrate, hydrofluorosilicate or fluorosilicate.

The alkyl polyglycoside is non-ionic. The alkyl polyglycoside is free of aromatic substituents.

At the collector composition, the alkyl polyglycoside can contain different compounds of formula II, i.e. two or more different compounds of formula II. The different compounds of formula II can differ in $G^1$, in $R^{AP}$ or in x, wherein x becomes for a single compound of formula II an integer n, which is one or more. Preferably, n is 1, 2, 3, 4, 5, 6, 7, 8, 9 or 10. More preferably, n is 1, 2, 3, 4, 5, 6, 7 or 8. Very preferably, n is 1, 2, 3, 4, 5 or 6. Particularly, n is 1, 2, 3 or 4. More particularly, n is 1, 2 or 3. Preferably, the different compounds of formula II differ by a different n. More preferably, the different compounds of formula II differ by a different n and one of the different n is 1 and one of the different n is 2. Very preferably, the different compounds of formula II differ by a different n, one of the different n is 1, one of the different n is 2 and the overall amount of molecules of compounds of formula II with n = 1 is higher than the overall amount of molecules of formula II with n = 2. Preferably, the different compounds of formula II differ by a different $R^{AP}$. More preferably, the different compounds of formula II differ by a different $R^{AP}$ and one of the different $R^{AP}$ is a linear or branched $C_8$ alkyl, a linear or branched $C_{10}$ alkyl, a linear or branched $C_{12}$ alkyl or a branched $C_{13}$ alkyl. Preferably, the different compounds of formula II differ by a different $G^1$.

Preferred is a method, wherein

(ii) the alkyl polyglycoside contains different compounds of formula II.

In formula II, $G^1$ is selected from monosaccharides with 5 or 6 carbon atoms. For example, $G^1$ is selected from pentoses and hexoses. Examples of pentoses are ribulose, xylulose, ribose, arabinose, xylose or lyxose. Examples of hexoses are galactose, mannose, rhamnose or glucose. Monosaccharides may be synthetic or derived or isolated from natural products, hereinafter in brief referred to as natural saccharides or natural polysaccharides, and natural saccharides being preferred. Preferably, $G^1$ is a natural monosaccharide and glucose, xylose, arabinose, rhamnose or a mixture thereof. More preferably, $G^1$ is a natural monosaccharide and glucose, xylose or a mixture thereof. Very preferably, $G^1$ is a natural monosaccharide and glucose. Monosaccharides can be selected from any of their enantiomers, naturally occurring enantiomers and naturally occurring mixtures of enantiomers being preferred. Naturally, in a specific molecule only whole groups of $G^1$ can occur.

If $G^1$ in formula II is a pentose, the pentose may be selected from ribulose such as D-ribulose, L-ribulose and mixtures thereof, preferably D-ribulose, xylulose such as D-xylulose, L-xylulose and mixtures thereof, preferably D-xylulose, ribose such as D-ribose, L-ribose and mixtures thereof, preferably D-ribose, arabinose such as D-arabinose, L-arabinose and mixtures thereof, preferably L-arabinose, xylose such as D-xylose, L-xylose and mixtures thereof, preferably D-xylose and lyxose such as D-lyxose, L-lyxose and mixtures thereof, preferably D-lyxose. If $G^1$ in the formula II is a hexose, the hexose may be selected from galactose such as D-galactose, L-galactose and mixtures thereof, preferably D-galactose, mannose such as D-mannose, L-mannose and mixtures thereof, preferably D-mannose, rhamnose such as D-rhamnose, L-rhamnose and mixtures thereof, preferably L-rhamnose and glucose such as D-glucose, L-glucose and mixtures thereof, preferably D-glucose. More preferably, $G^1$ in the formula II is glucose, preferably D-glucose, xylose, preferably D-xylose, arabinose, preferably D-arabinose, rhamnose, preferably L-rhamnose, and mixtures thereof. More preferably, $G^1$ in the formula II is glucose, preferably D-glucose and/or xylose, preferably D-xylose, and/or arabinose, preferably D-arabinose, and in particular xylose, preferably D-xylose and/or arabinose, preferably D-arabinose. For example, $G^1$ in the formula II is xylose, preferably D-xylose or arabinose, preferably D-arabinose. $G^1$ is for example selected from monosaccharides with 5 or 6 carbon atoms, which are obtained from a fermentative process of a biomass source. The biomass source may be selected from the group comprising pine wood, beech wood, wheat straw, corn straw, switchgrass, flax, barley husk, oat husk, bagasse, miscanthus and the like.

$G^1$ can comprise a mixture of monosaccharides with 5 or 6 carbon atoms.

Preferred is a method, wherein $G^1$ is a mixture of monosaccharides with 5 or 6 carbon atoms.

Preferred is a method, wherein $G^1$ is a mixture of xylose and glucose or a mixture of xylose and arabinose and optionally glucose.

Preferred is a method, wherein $G^1$ is glucose, xylose or a mixture thereof.

Preferred is a method, wherein $G^1$ is glucose.

Preferred is a method, wherein $G^1$ is D-glucose.

If the mixture of monosaccharides with 5 or 6 carbon atoms comprises a mixture of glucose and xylose, the weight ratio of glucose to xylose may vary in a wide range, depending on the biomass source used. For example, if the mixture of monosaccharides with 5 or 6 carbon atoms comprises a mixture of glucose and xylose, the weight ratio of glucose to xylose (glucose [wt.%] / xylose [wt.%]) in the mixture is preferably from 20:1 to 1:10, more preferably from 10:1 to 1:5, very preferably from 5:1 to 1:2 and particularly from 3:1 to 1:1.

If the mixture of monosaccharides with 5 or 6 carbon atoms comprises a mixture of xylose and arabinose, the weight ratio of xylose to arabinose may vary in a wide range, depending on the biomass source used. For example, if the mixture of monosaccharides with 5 or 6 carbon atoms comprises a mixture of xylose and arabinose, the weight ratio of xylose to arabinose (xylose [wt.%] / arabinose [wt.%]) in the mixture is preferably from 150:1 to 1:10, more preferably from 100:1 to 1:5, very preferably from 90:1 to 1:2 and particularly from 80:1 to 1:1.

If the mixture of monosaccharides with 5 or 6 carbon atoms comprises a mixture of glucose and xylose and arabinose, the weight ratio of glucose to xylose to arabinose may vary in a wide range, depending on the biomass source used. For example, if the mixture of monosaccharides with 5 or 6 carbon atoms comprises a mixture of glucose and xylose and arabinose, the weight ratio of glucose to arabinose (glucose [wt.%] / arabinose [wt.%]) in the mixture is preferably from 220:1 to 1:20, more preferably from 200:1 to 1:15, very preferably from 190:1 to 1:10 and particularly from 180:1 to 1:8. Additionally or alternatively, the weight ratio of xylose to arabinose (xylose [wt.%] / arabinose [wt.%]) in the mixture is preferably from 150:1 to 1:20, more preferably from 120:1 to 1:15, very preferably from 100:1 to 1:10 and particularly from 80:1 to 1:8. Additionally or alternatively, the weight ratio of glucose to xylose (glucose [wt.%] / xylose [wt.%]) in the mixture is preferably from 150:1 to 1:20, more preferably from 120:1 to 1:15, very preferably from 100:1 to 1:10 and particularly from 80:1 to 1:8.

In the formula II, x (also named degree of polymerization [DP]) is preferably in the range from 1 to 8, more preferably x is in the range from 1.0 to 3.0, very preferably x is in the range from 1.05 to 3.0, particularly in the range from 1.1 to 2.5, more particularly in the range from 1.1 to 1.8, very particularly in the range from 1.1 to 1.7, especially in the range from 1.2 to 1.6, more especially in the range from 1.3 to 1.5 and very especially in the range from 1.4 to 1.5. In the context of the present invention, x refers to average values, and x is not necessarily an integer. In a specific molecule only whole groups of $G^1$ can occur. Preferably, x is determined by high temperature gas chromatography (HTGC), e.g. 400° C, in accordance with K. Hill et al., Alkyl Polyglycosides, VCH Weinheim, New York, Basel, Cambridge, Tokyo, 1997, in particular pages 28 ff., or by HPLC. In HPLC methods, x may be determined by the Flory method. If the values obtained by HPLC and HTGC are different, preference is given to the values based on HTGC. For a single compound of formula II, x becomes for an integer n, which is one or more.

Preferred is a method, wherein x is in the range from 1.0 to 3.0.

A compound of the formula II contains at least one glycosidic bond, which connects covalently $R^{AP}$ to $G^1$. If one $G^1$ unit is present in a compound of formula II, then there is one glycosidic bond. If two $G^1$ units are present in a compound of formula II, then there is one further glycosidic bond, which connects covalently the $G^1$ unit connected covalently to $R^{AP}$ to the other $G^1$ unit. If three $G^1$ units are present in a compound of formula II, then there are two further glycosidic bonds in addition to the glycosidic bond, which connects covalently $R^{AP}$ to the $G^1$ unit. A glycosidic bond can be present in an alpha or in a beta conformation. For example, if one $G^1$ unit is present in a compound of formula II, the

compound of formula II is in the alpha conformation or in beta conformation, preferably in the alpha conformation. For example, if two or more $G^1$ units are present in a compound of formula II, the glycosidic bonds are all in alpha confirmation, all in beta confirmation or some are in alpha confirmation and some are in beta confirmation. Two or more compounds of formula II can be identical except for the confirmation at the glycosidic bond, which connects covalently $R^{AP}$ to $G^1$. Accordingly, there is an average ratio between an alpha confirmation and a beta confirmation at the glycosidic bond, which connects covalently $R^{AP}$ to $G^1$. The average ratio can be 1:0, i.e. all in alpha confirmation, 0:1, i.e. all in beta confirmation and in between. In case, some are in alpha confirmation and some are in beta confirmation at the glycosidic bond, which connects covalently $R^{AP}$ to $G^1$, the average ratio alpha to beta is preferably from 10:1 to 1:10, more preferably from 10:1 to 1:5, even more preferably from 10:1 to 1:4 and most preferably from 10:1 to 1:3, e.g. 2:1 to 1:2. An average ratio between an alpha confirmation and a beta confirmation at the glycosidic bond, which connects covalently $R^{AP}$ to $G^1$, for all compounds of formula II is defined in analogy and the same preferences apply. An average ratio between an alpha confirmation and a beta confirmation at all glycosidic bonds, for all compounds of formula II is defined in analogy and the same preferences apply.

A linear or branched aliphatic $C_6$-$C_{22}$ alkyl is for example n-hexyl, particularly n-hex-1-yl, or isohexyl, particularly 2-methyl-pent-1-yl or 4-methyl-pent-1-yl; n-heptyl, particularly n-hept-1-yl, or iso-heptyl, particularly 2-methyl-hex-1-yl or 5-methyl-hex-1-yl; n-octyl, particularly n-oct-1-yl, or iso-octyl, particularly 2-methyl-hept-1-yl, 6-methyl-hept-1-yl or 2-ethyl-hex-1-yl; n-nonyl, particularly n-non-1-yl, or iso-nonyl, particularly 2-methyl-oct-1-yl or 7-methyl-oct-1-yl; n-decyl, particularly n-dec-1-yl, or iso-decyl, particularly 2-methyl-non-1-yl, 8-methyl-non-1-yl or 3-propyl-hept-1-yl; n-undecyl, particularly n-undec-1-yl, or iso-undecyl, particularly 2-methyl-dec-1-yl or 9-methyl-dec-1-yl; n-dodecyl, particularly n-dodec-1-yl, or branched iso-dodecyl, particularly 2-methyl-undec-1-yl, 9-methyl-undec-1-yl, 4,8-dimethyl-dec-1-yl, 2,6,8-trimethyl-non-1-yl, 2-ethyl-dec-1-yl, 2-ethyl-3-methyl-non-1-yl, 2,4-diethyl-oct-1-yl, or 2-butyl-oct-1-yl; n-tridecyl, particularly n-tridec-1-yl, or branched iso-tridecyl, particularly 2-methyl-dodec-1-yl, 11-methyl-dodec-1-yl, 2,4,8-trimethyl-dec-1-yl, 2,4,6,8-tetramethyl-non-1-yl, 2-ethyl-undec-1-yl, 2,2-diethyl-non-1-yl, 2-propyl-dec-1-yl; n-tetradecyl, particularly n-tetradec-1-yl, or branched iso-tetradecyl, particularly 2-methyl-tridec-1-yl, 12-methyl-tridec-1-yl, 2,6,10-trimethyl-undec-1-yl, 2,4,6,8-tetramethyl-dec-1-yl, 2-ethyl-dodec-1-yl, 7-ethyl-2-methyl-undec-1-yl, 2-(2-methylpropyl)-dec-1-yl, 2-butyl-2-ethyl-6-methyl-hept-1-yl, 2-pentyl-non-1-yl or 2-hexyl-oct-1-yl; n-pentadecyl, particularly n-penta-dec-1-yl, or branched iso-pentadecyl, particularly 2-methyl-tetradec-1-yl, 13-methyl-tetradec-1-yl, 3,7,11-trimethyl-dodec-1-yl, 2-propyl-dodec-1-yl or 3-hexyl-non-1-yl; n-hexadecyl, particularly n-hexadec-1-yl, or branched iso-hexadecyl, particularly 2-methyl-pentadec-1-yl, 14-methyl-pen-tadec-1-yl, 2-ethyl-tetradec-1-yl, 2-butyl-dodec-1-yl or 2-hexyl-dec-1-yl; n-heptadecyl, particularly n-heptadec-1-yl, or branched iso-heptadecyl, particularly 2-methyl-hexadec-1-yl or 15-methyl-hexadec-1-yl; n-octadecyl, particularly n-octadec-1-yl, or branched iso-octadecyl, particularly 2-methyl-heptadec-1-yl or 16-methyl-heptadec-1-yl; n-nonadecyl, particularly n-nonadec-1-yl, or branched iso-nonadecyl, particularly 2-methyl-octadec-1-yl or 17-methyl-octadec-1-yl; n-icosyl, particularly n-icos-1-yl, or branched iso-icosyl, particularly 2-methyl-nonadec-1-yl or 18-methyl-nonadec-1-yl; n-henicosyl, particularly n-henicos-1-yl, or iso-henicosyl, particularly 19-methyl-icos-1-yl; n-docosyl, particularly n-docos-1-yl, or iso-docosyl, particularly 20-methyl-henicos-1-yl; or a mixture thereof.

A linear $C_6$-$C_{22}$ alkenyl is for example n-undec-10-en-1-yl, a $C_{18}$ alkenyl, particularly (9Z)-octa-dec-9-en-1-yl, (9E)-octadec-9-en-1-yl, (9Z,12Z)-octadec-9,12-dien-1-yl or (9Z,12Z,15Z)-octa-dec-9,12,15-trien-1-yl, or a mixture thereof.

If $R^{AP}$ connects covalently to the oxygen atom in formula II via a carbon atom, which is covalently bound only to one other carbon atom in $R^{AP}$, then $R^{AP}$-OH is a primary alcohol ($-CH_2$-OH).

Preferably, the average degree of branching of $R^{AP}$ is between 0 and 3.5. More preferably, the average degree of branching of $R^{AP}$ is 0, between 0.2 and 0.7 or between 2.0 and 3.5. Very preferably, the average degree of branching of $R^{AP}$ is 0, between 0.2 and 0.7 or between 2.0 and 2.5.

$R^{AP}$ is preferably a linear or branched $C_7$-$C_{18}$ alkyl or a linear $C_{18}$ alkenyl. More preferably, $R^{AP}$ is a linear or branched $C_8$-$C_{18}$ alkyl or a linear $C_{18}$ alkenyl. Very preferably, $R^{AP}$ is a linear or branched $C_8$-$C_{18}$ alkyl, wherein $R^{AP}$ connects covalently to the oxygen atom in formula II via a carbon atom, which is covalently bound only to one other carbon atom in $R^{AP}$, or a linear $C_{18}$ alkenyl, wherein $R^{AP}$ connects covalently to the oxygen atom in formula II via a carbon atom, which is covalently bound only to one other carbon atom in $R^{AP}$. Particularly, $R^{AP}$ is a linear or branched $C_8$-$C_{16}$ alkyl. More particularly, $R^{AP}$ is a linear or branched $C_8$-$C_{16}$ alkyl, wherein $R^{AP}$ connects covalently to the oxygen atom in formula II via a carbon atom, which is covalently bound only to one other carbon atom in $R^{AP}$. Very particularly, $R^{AP}$ is a linear or branched $C_8$-$C_{14}$ alkyl. Especially, $R^{AP}$ is a linear or branched $C_8$-$C_{14}$ alkyl, wherein $R^{AP}$ connects covalently to the oxygen atom in formula II via a carbon atom, which is covalently bound only to one other carbon atom in $R^{AP}$. More especially, $R^{AP}$ is a linear or branched $C_8$-$C_{12}$ alkyl or a branched $C_{13}$ alkyl. Very especially, $R^{AP}$ is a linear or branched $C_8$-$C_{12}$ alkyl or a branched $C_{13}$ alkyl, wherein $R^{AP}$ connects covalently to the oxygen atom in formula II via a carbon atom, which is covalently bound only to one other carbon atom in $R^{AP}$. Most especially, $R^{AP}$ is a linear or branched $C_8$ alkyl, a linear or branched $C_{10}$ alkyl, a linear or branched $C_{12}$ alkyl or a branched $C_{13}$ alkyl. Very most especially, $R^{AP}$ is a linear or branched $C_8$ alkyl, a linear or branched $C_{10}$ alkyl or a linear or branched $C_{12}$ alkyl.

Preferred is a method, wherein $R^{AP}$ is a linear or branched $C_8$-$C_{18}$ alkyl or a linear $C_{18}$ alkenyl.

Preferred is a method, wherein $R^{AP}$ is a linear or branched $C_8$ alkyl, a linear or branched $C_{10}$ alkyl, a linear or branched $C_{12}$ alkyl or a branched $C_{13}$ alkyl.

Preferred is a method, wherein $R^{AP}$ is linear.

The alkyl polyglycoside containing a compound of formula II is preferably obtainable by glycosylation of one equivalent of an alcohol of formula II-AL

$R^{AP}$-OH (II-AL),

wherein $R^{AP}$ is defined as above, with formally a glycose of the formula II-MS

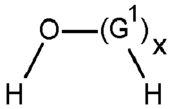 (II-MS),

wherein $G^1$ and x are defined as above. The glycosylation of the alcohol of formula II-AL can be conducted by well-known procedures. At "Alkyl Polyglycosides - Properties and Applications of a new Class of Surfactants", W. von Rybinski and K. Hill, Angewandte Chemie. Int. Ed. 1998, 37, 1327-1345, and cited references therein, several methods are described, especially in the chapter 2. Preferably, the alkyl polyglycoside is obtained under acidic catalysis. More preferably, the alkyl polyglycoside is obtained by acetalization of a monosaccharide with an alcohol of formula II-AL under acidic catalysis or is obtained by transacetalization of a butyl polyglycoside under acidic catalysis, which is obtained by degradation of a starch or dextrose syrup in butanol under acidic catalysis, with an alcohol of formula II-AL.

Linear primary alcohols are obtainable from a natural source, which is a natural fat or an oil of plant or animal origin, by hydrogenation (= a linear primary alcohol from a natural source). Linear or mono-branched primary alcohols are obtainable by a hydroformylation reaction via adding carbon monoxide and hydrogen to a linear mono-olefin with the double bond at an end of the linear alkylene chain to obtain an aldehyde and followed by hydrogenation of the aldehyde to obtain the oxo-alcohols. By an introduction of the carbonyl moiety at the 1-position of the linear mono-olefin, a finally linear primary alcohol is obtained. By an introduction of the carbonyl moiety at the 2-position of the linear mono-olefin, a finally mono-branched alcohol with one methyl group at the 2-position of the mono-branched primary alcohol is obtained (= a linear or mono-branched oxo-alcohol). Branched primary alcohols are obtainable by a hydroformylation reaction via adding carbon monoxide and hydrogen to a branched mono-olefin with the double bond at an end of the branched alkylene chain to obtain an aldehyde and followed by hydrogenation of the aldehyde to obtain the oxo-alcohols. By an introduction of the carbonyl moiety at the 1-position of the branched, a finally branched primary alcohol is obtained. The degree of branching remains the same (= a branched oxo-alcohol). By an introduction of the carbonyl moiety at the 2-position of the branched mono-olefin, a branched alcohol with one methyl group at the 2-position of the branched primary alcohol is obtained. The degree of branching is increased by one (= a branched oxo-alcohol). Mono-branched primary alcohols are obtainable by a Guerbet reaction, i.e. converting a primary linear starting alcohol into its beta-alkylated dimer alcohol with loss of one equivalent of water (= a mono-branched primary Guerbet alcohol). Preferably, the alcohol of formula II-AL is a primary linear alcohol from a natural source, a linear or mono-branched primary oxo-alcohol, a branched primary oxo-alcohol or a mono-branched primary Guerbet alcohol. More preferably, the alcohol of formula II-AL is a primary linear alcohol from a natural source, a branched primary oxo-alcohol or a mono-branched primary Guerbet alcohol. Very preferably, the alcohol of formula II-AL is a primary linear alcohol from a natural source or a branched primary oxo-alcohol. Particularly, the alcohol of formula II-AL is a primary linear alcohol from a natural source.

Preferred is a method, wherein

(ii) the alkyl polyglycoside is obtainable by glycosylation of one equivalent of an alcohol of the formula II-AL

$R^{AP}$-OH (II-AL),

wherein $R^{AP}$ is defined as above, with a glycose of the formula II-MS

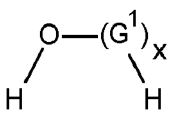 (II-MS),

wherein $G^1$ and x are defined as above.

An example of an alkyl polyglycoside is APP-01, APP-02, APP-03, APP-04, APP-05 or APP-06 as described

below in table 1.

Table 1

| alkyl polyglycoside | $R^{AP}$ unsubstituted alkyl | $G^1$ | x |
|---|---|---|---|
| APP-01 | $C_8/C_{10}$ | glucose | -1.4 |
| APP-02 | $C_{12}$ | glucose | -1.4 |
| APP-03 | linear $C_8$-$C_{10}$ | glucose | 1.5 |
| APP-04 | linear $C_{12}$-$C_{14}$ | glucose | 1.5 |
| APP-05 | branched $C_{10}$ | glucose and xylose | 1.5 |
| APP-06 | branched $C_{13}$ | glucose and xylose | 1.5 |

Preferred is a method, wherein

(i) the amidoamine contains different compounds of formula I, or salts of the protonated different compounds of formula I and an anion;
(ii) the alkyl polyglycoside contains different compounds of formula II.

Preferred is a method, wherein the collector composition comprises

(i) an amidoamine, which contains a compound of formula I

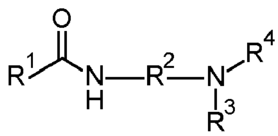 (I),

wherein

$R^1$ is a linear or branched aliphatic $C_{11}$-$C_{19}$ alkyl or a linear $C_{11}$-$C_{19}$ aliphatic alkenyl,
$R^2$ is a linear or branched aliphatic $C_2$-$C_6$ alkylene,
$R^3$ and $R^4$ are independently from each other H, $C_1$-$C_2$ alkyl or a substituent of formula I-S

$$*\text{-[-(CH}_2\text{-)}_p\text{-NH-]}_q\text{-(-CH}_2\text{-)}_p\text{-NH}_2 \qquad \text{(I-S)}$$

wherein

p is 2, 3 or 4,
q is 0, 1, 2 or 3, and
* represents the connecting site of the substituent, or

a salt of a protonated compound of formula I and an anion, and
which is obtainable by condensation of a fatty acid of formula I-FA with an amine of formula I-A

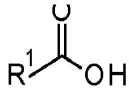 (I-FA)

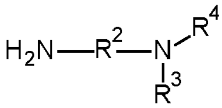 (I-A)

,

and

(ii) an alkyl polyglycoside, which contains a compound of formula II

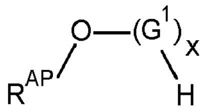 (II),

wherein

$R^{AP}$ is a linear or branched $C_6$-$C_{22}$ alkyl or a linear $C_6$-$C_{22}$ alkenyl,
$G^1$ is a monosaccharide residue having 5 or 6 carbon atoms,
x is an average value from 1 to 10, and
which is obtainable by glycosylation of one equivalent of an alcohol of the formula II-AL

$R^{AP}$-OH (II-AL),

with a glycose of the formula II-MS

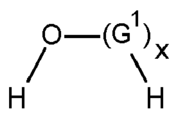 (II-MS)

.

Preferably, the collector composition comprises (i) 65 to 99 parts by weight of the amidoamine, (ii) 1 to 35 parts by weight of the alkyl polyglycoside, and the sum of the amidoamine and the alkyl polyglycoside is 100 parts by weight. More preferably, the collector composition comprises

(i) 75 to 99 parts by weight of the amidoamine, (ii) 1 to 25 parts by weight of the alkyl polyglycoside, and the sum of the amidoamine and the alkyl polyglycoside is 100 parts by weight. Very preferably, the collector composition comprises (i) 80 to 99 parts by weight of the amidoamine, (ii) 1 to 20 parts by weight of the alkyl polyglycoside, and the sum of the amidoamine and the alkyl polyglycoside is 100 parts by weight. Particularly, the collector composition comprises (i) 82 to 98 parts by weight of the amidoamine, (ii) 2 to 18 parts by weight of the alkyl polyglycoside, and the sum of the amidoamine and the alkyl polyglycoside is 100 parts by weight. More particularly, the collector composition comprises (i) 84 to 96 parts by weight of the amidoamine, (ii) 4 to 16 parts by weight of the alkyl polyglycoside, and the sum of the amidoamine and the alkyl polyglycoside is 100 parts by weight. Very particularly, the collector composition comprises (i) 85 to 95 parts by weight of the amidoamine, (ii) 5 to 15 parts by weight of the alkyl polyglycoside, and the sum of the amidoamine and the alkyl polyglycoside is 100 parts by weight. Especially, the collector composition comprises (i) 87 to 93 parts by weight of the amidoamine, (ii) 7 to 13 parts by weight of the alkyl polyglycoside, and the sum of the amidoamine and the alkyl polyglycoside is 100 parts by weight.

Preferred is a method, wherein the collector composition comprises

(i) 65 to 99 parts by weight of the amidoamine, and
(ii) 1 to 35 parts by weight of the alkly polyglycoside,

and the sum of the amidoamine and the alkyl polyglycoside is 100 parts by weight.
Preferably, the collector composition consists out of (i) the amidoamine and (ii) the alkyl polyglycoside. More preferably, the collector composition consists out of (i) 65 to 99 parts by weight of the amidoamine, (ii) 1 to 35 parts by weight of the alkyl polyglycoside, and the sum of the amidoamine and the alkyl polyglycoside is 100 parts by weight. Very preferably, the collector composition consists out of (i) 75 to 99 parts by weight of the amidoamine, (ii) 1 to 25 parts by weight of the alkyl polyglycoside, and the sum of the amidoamine and the alkyl polyglycoside is 100 parts by weight. Particularly, the collector composition consists out of (i) 80 to 99 parts by weight of the amidoamine, (ii) 1 to 20 parts by weight of the alkyl polyglycoside, and the sum of the amidoamine and the alkyl polyglycoside is 100 parts by weight. More particularly, the collector composition consists out of (i) 82 to 98 parts by weight of the amidoamine, (ii) 2 to 18 parts by weight of the alkyl polyglycoside, and the sum of the amidoamine and the alkyl polyglycoside is 100 parts by weight. Very particularly, the collector composition comprises (i) 84 to 96 parts by weight of the amidoamine, (ii) 4 to 16 parts by weight of the alkyl polyglycoside, and the sum of the amidoamine and the alkyl polyglycoside is 100 parts by

weight. Especially, the collector composition consists out of (i) 85 to 95 parts by weight of the amidoamine, (ii) 5 to 15 parts by weight of the alkyl polyglycoside, and the sum of the amidoamine and the alkyl polyglycoside is 100 parts by weight. More especially, the collector composition consists out of (i) 87 to 93 parts by weight of the amidoamine, (ii) 7 to 13 parts by weight of the alkyl polyglycoside, and the sum of the amidoamine and the alkyl polyglycoside is 100 parts by weight.

The collector composition is added preferably as an aqueous solution or suspension. The aqueous solution or suspension of the collector composition is for example obtained by dissolving the amidoamine and the alkyl polyglycoside in water under stirring. Dissolving is conducted at room temperature or at a temperature above room temperature but below the boiling point of water. The aqueous solution or suspension of the collector composition contains the collector composition and water. The aqueous solution or suspension of the collector composition contains preferably 0.3 to 80 wt.% of the collector composition based on the weight of the aqueous solution or suspension of the collector composition and water. More preferably, the aqueous solution or suspension of the collector composition contains 0.5 to 60 wt.% of the collector composition based on the weight of the aqueous solution or suspension of the collector composition and water. Very preferably, the aqueous solution or suspension of the collector composition contains 0.6 to 40 wt.% of the collector composition based on the weight of the aqueous solution or suspension of the collector composition and water. Particularly, the aqueous solution or suspension of the collector composition contains 0.7 to 30 wt.% of the collector composition based on the weight of the aqueous solution or suspension and water. More particularly, the aqueous solution or suspension of the collector composition contains 0.8 to 20 wt.% of the collector composition based on the weight of the aqueous solution or suspension and water. Very particularly, the aqueous solution or suspension of the collector composition contains 0.9 to 10 wt.% of the collector composition based on the weight of the aqueous solution or suspension and water.

Preferred is a method, wherein the collector composition is added as an aqueous solution or suspension.

The collector composition is added preferably in an amount of 10 g to 500 g per ton of the ore. The calculation is performed on basis of dry ore. The amount is more preferably from 30 g to 300 g per ton of the ore, very preferably from 40 g to 250 g per ton of the ore, particularly from 80 g to 240 g per ton of the ore, more particularly from 110 g to 230 g per ton of the ore, very particularly from 140 g to 220 g per ton of the ore and especially from 170 g to 210 g per ton of the ore.

Preferred is a method, wherein the collector composition is added in an amount between 10 g to 500 g per ton of the ore.

The pH value at the steps (c) and (d) of the method is preferably adjusted with a pH regulator to a specific pH value, typically to a pH value between 8 and 12, particularly between 9 and 11. A pH regulator is typically a strong base, for example sodium hydroxide, potassium hydroxide, sodium carbonate or potassium carbonate. Preferably, the pH value of the aqueous pulp is between 8 and 12, particularly between 9 and 11. Preferably, step (c), i.e. adding the collector composition to the aqueous pulp, takes place at a pH value between 8 and 12, particularly between 9 and 11. Preferably, the pH value of the aqueous mixture is between 8 and 12, particularly between 9 and 11. Preferably, step (d), i.e. aerating the aqueous mixture, takes place at a pH value between 8 and 12, particularly between 9 and 11. Preferably, (e), i.e. obtaining the concentrate enriched in iron mineral content, takes place at a pH value between 8 and 12, particularly between 9 and 11. A regulation of the pH value supports that the ore, especially the particles of the ore, exhibit the correct surface charge.

Preferred is a method, wherein the pH value at step (c) is between 8 and 12.

Preferred is a method, wherein the pH value at step (c) and at step (b) is between 8 and 12.

Preferred is a method, wherein the pH value at step (c) and at step (d) is between 8 and 12.

Preferred is a method, wherein the pH value at step (c), at step (b) and at step (d) is between 8 and 12.

Preferred is a method, wherein the pH value at step (c), at step (b), at step (d) and at step (e) is between 8 and 12.

A flotation auxiliary is different to (i) an amidoamine and (ii) an alkyl polyglycoside and for example a depressing agent, a froth regulator, a co-collector or an extender oil.

A depressing agent helps to prevent flotation of an ingredient of the ore, which is not desired to get part of the froth or supports in general the selectivity of the method of manufacturing the concentrate. A depressing agent is for example a hydrophilic polysaccharide, particularly a starch, or sodium silicate. The starch is for example a native starch or a modified starch. A native starch is for example a starch from corn, wheat, oat, barley, rice, millet, potato, pea, tapioca or manioc. The native starch is preferably pregelatinized, i.e. warmed for starch gelation in an aqueous solution, or caustified, i.e. treated with a strong base, for example NaOH, KOH or $Ca(OH)_2$, in an aqueous solution. A modified starch is either a degraded starch, which possesses a reduced weight-average molecular weight versus the original starch, a chemically modified starch or a degraded and chemically modified starch. A degradation of starch is for example possible by oxidation or treatment by acid, base or enzymes. The degradation leads typically to an increased content on oligosaccharides or dextrines. A chemical modification is a functionalization of a starch by covalent linkage of a chemical group to the starch with exception of a glycosylation with an alcohol of formula II-AL. A chemically modified starch is for example obtainable by esterification or etherification of a starch with exception of a glycosylation with an

alcohol of formula II-AL. The esterification of an acid with a starch is for example performed with an anhydride of the acid or a chloride of the acid. The etherification of a starch is for example possible with an organic reagent, which contains a reactive epoxide functionality. Preferred is a depressing agent, which is a starch, very preferably a native starch, particularly a pregelatinized starch or a caustified starch, especially a caustified starch. A depressing agent is preferably added in an amount of 100 to 3000 g per ton of the ore. The calculation is performed on basis of dry ore. The amount is more preferably from 200 g to 2000 g per ton of the ore, very preferably from 300 g to 1200 g per ton of the ore, particularly from 400 g to 900 g per ton of the ore and more particularly from 450 g to 600 g per ton of the ore.

A froth regulator helps to improve the efficiency of the method of manufacturing by interfering with the froth generation. A froth property is for example the froth height respectively the volume of the froth or the stability of the froth, i.e. the time to collapse after stop of aerating. A froth regulator is for example pine oil, terpineol, methylisobutyl carbinol, $C_6$-$C_9$ alcohol, particularly 2-ethylhexanol or hexanol, an alcoholic ester, particularly a mixture comprising 2,2,4-trimethyl-1,3-pentandiolmonoisobutyrate, a distillation residue from an oxo-synthesis of 2-ethylhexanol, triethoxybutane, an alkoxylated $C_1$-$C_6$ alcohol, particularly an ethoxylated and/or propoxylated $C_1$-$C_6$ alcohol, polyethylene glycol or polypropylene glycol. It is still attractive, if the method does not require the addition of a froth regulator. Preferably, the method is free of using a froth regulator.

A co-collector is a surface-active compound, which is different to an amidoamine and an alkyl polyglycoside. A co-collector is for example cationic, non-ionic or anionic, preferably cationic or non-ionic and very preferably cationic. A cationic co-collector is for example $C_9$-$C_{18}$ alkylamine, 2-($C_9$-$C_{18}$ alkyl-amino)ethyl-1-amine, N'-($C_9$-$C_{18}$ alkyl)propane-1,3-diamine, 3-($C_9$-$C_{18}$ alkoxy)propyl-1-amine, N'-(3-($C_9$-$C_{18}$ alkoxy)propyl)propane-1,3-diamine. An anionic co-collector is for example a $C_8$-$C_{18}$ alkyl sulfate, particularly sodium lauryl sulfate, a $C_6$-$C_{10}$ alkyl sulfosuccinate monoester or a $C_8$-$C_{20}$ fatty acid. A non-ionic co-collector is for example $C_9$-$C_{15}$ alkyl alcohol, which is branched, or ethoxylated $C_9$-$C_{15}$ alkyl alcohol, which is branched and ethoxylated with 2 to 4 mole ethylene oxide. In case of a co-collector as a flotation auxiliary, the co-collector might be added together with the collector composition. In this case, this part of step (b) occurs simultaneously with step (c).

It is still attractive, if the method does not require the addition of a co-collector.

Preferred is a method, wherein an amine of formula $R^2$-$NH_2$, wherein $R^2$ is a $C_1$-$C_{24}$ alkyl, a phenyl, a benzyl, a $C_1$-$C_{24}$ alkenyl, a heterocyclyl, an unsubstituted aryl or an aryl substituted by one or more $C_1$-$C_8$ alkyl substituents, is contained in a weight ratio below 1 to 100 with 100 being the weight amount of all compounds of formula I. Very preferred, the method is free of adding an amine of formula $R^2$-$NH_2$. Particularly preferred, the method is free of adding an amine of formula $R^2$-$NH_2$ or a salt of a protonated amine of formula $R^2$-$NH_2$ and an anion.

Preferred is a method, wherein an etheramine is contained in a weight ratio below 20 to 100 with 100 being the weight amount of all compounds of formula I. Very preferred is a method, wherein an etheramine is contained in a weight ratio below 1 to 100 with 100 being the weight amount of all compounds of formula I. Particularly preferred, the method is free of adding an etheramine. Especially preferred, the method is free of adding an etheramine or a salt of a protonated etheramine and an anion. An etheramine is herein understood as a molecule, which comprises the structural element alkyl-O-alkylene-NH-..., for example molecules described by alkyl-O-alkylene-$NH_2$ or alkyl-O-alkylene-NH-alkylene-$NH_2$.

An extender oil is for example kerosene, diesel or a methyl or ethyl ester of a $C_{12}$-$C_{20}$ fatty acid.

Preferred is a method, wherein at step (b) one or more flotation auxiliaries are added and one of the flotation auxiliaries is a depressing agent, a froth regulator, a co-collector or an extender oil.

Preferred is a method, wherein one of the flotation auxiliaries added at step (b) is a depressing agent.

Preferred is a method, wherein a depressing agent, which is starch, is added.

Preferred is a method, wherein one of the flotation auxiliaries added at step (b) is a depressing agent and one of the flotation auxiliaries is a co-collector, which is added at step (b) before step (c) or is added simultaneously with the collector composition.

In the method of manufacturing a concentrate, conventional inverse flotation plant equipment may be used. Preferably, the collector composition and optionally a flotation auxiliary, which is a co-collector, is or are added to the aqueous pulp, which is already in the flotation cell, which is used for aerating the mixture in step (d).

After adding of a collector composition to the aqueous pulp, the obtained aqueous mixture is preferably kept, particularly under stirring, for a conditioning period before aerating the aqueous mixture. This allows the collector composition and optionally a flotation auxiliary, which is a co-collector, to condition the ore, particularly the ore particles, in the aqueous mixture. The conditioning period lasts for example for one minute or up to 10 or 15 minutes.

At aerating the aqueous mixture, air is typically injected into the base of the flotation cell. Air bubbles are formed and rise to the surface and generate the froth at the surface. The injection of air may be continued until no more froth is formed. This might last for example for one minute or up to 15 or 20 minutes. The froth is removed.

For obtaining the concentrate enriched in iron mineral content, aerating is typically stopped. The concentrate enriched in iron mineral content sinks typically to the bottom of the flotation cell.

In some cases, it may be desirable to treat the concentrate enriched in iron mineral content in a similar manner

again. For example, the steps (c) and (d) are repeated as step (d-c) followed by step (d-d) before step (e) is conducted.

The concentrate enriched in iron mineral content contains preferably at least 60 wt.% Fe atoms based on the overall weight of the concentrate enriched in iron mineral content, very preferably at least 65 wt.%. The weight of Fe atoms is similar to the weight of iron content. The concentrate enriched in iron mineral content contains preferably less than 2.5 wt.% of $SiO_2$ based on the overall weight of the concentrate enriched in iron mineral, more preferably less than 2.1 wt.%, very preferably 2.0 wt.% and particularly less than 1.9 wt.% by weight of $SiO_2$. The concentrate enriched in iron mineral content contains preferably at least 60 wt.% of Fe atoms and less than 2.5 wt.% of $SiO_2$ based on the overall weight of the concentrate enriched in iron mineral content, very preferably at least 65 wt.% of Fe atoms and less than 2.1 wt.%.

The above described preferences for the method of manufacturing a concentrate or for the added collector composition are described for the method. These preferences apply also to the further embodiments of the invention.

A further embodiment of the invention is a use of a collector composition comprising

(i) an amidoamine, which contains a compound of formula I

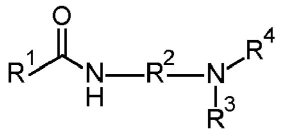 (I),

wherein

$R^1$ is a linear or branched aliphatic $C_7$-$C_{19}$ alkyl or a linear $C_7$-$C_{19}$ aliphatic alkenyl,
$R^2$ is a linear or branched aliphatic $C_2$-$C_6$ alkylene,
$R^3$ and $R^4$ are independently from each other H, $C_1$-$C_2$ alkyl or a substituent of formula I-S

$$*-[-(CH_2-)_p-NH-]_q-(-CH_2-)_p-NH_2 \quad \text{(I-S)},$$

wherein

p is 2, 3 or 4,
q is 0, 1, 2 or 3, and
* represents the connecting site of the substituent, or

a salt of a protonated compound of formula I and an anion, and

(ii) an alkyl polyglycoside, which contains a compound of formula II

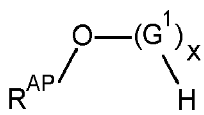 (II),

wherein

$R^{AP}$ is a linear or branched $C_6$-$C_{22}$ alkyl or a linear $C_6$-$C_{22}$ alkenyl,
$G^1$ is a monosaccharide residue having 5 or 6 carbon atoms,
x is an average value from 1 to 10,

as a flotation collector for manufacturing a concentrate enriched in iron mineral content from an ore, which contains an iron mineral and silicate, by a reverse flotation.

A further embodiment of the invention is a collector composition comprising

(i) an amidoamine, which contains a compound of formula I

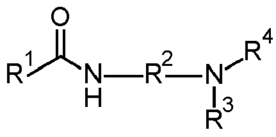

(I)

wherein

$R^1$ is a linear or branched aliphatic $C_7$-$C_{19}$ alkyl or a linear $C_7$-$C_{19}$ aliphatic alkenyl,
$R^2$ is a linear or branched aliphatic $C_2$-$C_6$ alkylene,
$R^3$ and $R^4$ are independently from each other H, $C_1$-$C_2$ alkyl or a substituent of formula I-S

$$*\text{-}[\text{-}(CH_2\text{-})_p\text{-}NH\text{-}]_q\text{-}(\text{-}CH_2\text{-})_p\text{-}NH_2 \qquad \text{(I-S)}$$

wherein

p is 2, 3 or 4,
q is 0, 1, 2 or 3, and
* represents the connecting site of the substituent, or

a salt of a protonated compound of formula I and an anion, and

(ii) an alkyl polyglycoside, which contains a compound of formula II

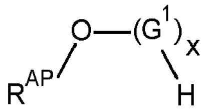

(II),

wherein

$R^{AP}$ is a linear or branched $C_6$-$C_{22}$ alkyl or a linear $C_6$-$C_{22}$ alkenyl,
$G^1$ is a monosaccharide residue having 5 or 6 carbon atoms,
x is an average value from 1 to 10.

Preferably, the collector composition is part of an aqueous solution or suspension, which contains the collector composition and water.

The following examples illustrate further the invention without limiting it. Percentage values are percentage by weight if not stated differently.

A) amidoamine collector

SOFA-1 is a distilled soy oil fatty acid grade with a specification of ≤ 0.1 wt.% saturated C14 carboxylic acid (e.g. tetradecanoic acid), 10-23 wt.% saturated C16 carboxylic acid (e.g. palmitic acid), 2-8 wt.% saturated C18 carboxylic acid (e.g. stearic acid), 24-34 wt.% mono-unsaturated C18 carboxylic acid (e.g. oleic acid), 38-50 wt.% di-unsaturated C18 carboxylic acid (e.g. linoleic acid) and 2-8 wt.% tri-unsaturated C18 carboxylic acid (e.g. linolenic acid).

A-1: Reaction product of soy oil fatty acid and N,N-dimethylpropane-1,3-diamine (101)

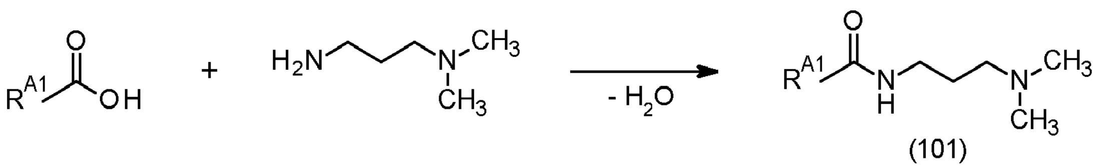


(101)

A stirred solution of distilled soy oil fatty acid (410 g SOFA-1, 1.5 mol, represented by $R^{A1}$-C(=O)OH in the reaction scheme) is heated to 40°C and N',N'-dimethylpropane-1,3-diamine (199 g, 1.95 mol; molar ratio of $R^{A1}$-C(=O)OH to N,N-dimethylpropane-1,3-diamine is 1 to 1.3) is added in 5 minutes. The addition causes an exothermic reaction due

to a salt formation. After complete addition, the reaction mixture is quickly heated until 80 °C and then heated slowly until 150 °C in 1.5 hours. The mixture is kept at reflux at 150 °C for 1 hour. Afterwards, water is distilled. Then, the reaction temperature is slowly raised until 180 °C and is kept at this temperature for one hour. The acidic index is measured by titration with KOH solution (0.05 mol/L) to identify the end of the reaction by using 50 mL neutralized ethanol as solvent and phenolphthalein as indicator. After all the fatty acid is consumed as determined by a measured acidic index of 0 mg KOH/g, the mixture is cooled to 50 °C. The reaction product (101) is obtained as a yellow brownish solid in a yield of 91%.

FT-IR $\nu_{max}$ (liquid film) main bands [$cm^{-1}$]: 3292.2, 3083.6, 2926.3, 2855.7, 1648.8, 1559, 1462.7 $^{13}C$ NMR (126 MHz, Chloroform-d): δ 173.04 (C-6), 130.19 (double bonds), 130.03 (double bonds), 129.97 (double bonds), 129.74 (double bonds), 128.05 (double bonds), 127.92 (double bonds), 58.60 (C-2), 45.39 (C-10, C-11), 39.19 (C-4), 36.95 (C-7), 31.93, 31.91, 31.53, 29.78, 29.75, 29.70, 29.67, 29.65, 29.53, 29.43, 29.36, 29.33, 29.18, 27.22 (C-21, C-24), 26.28 (C-3), 25.79 (C-34), 25.64, 22.69, 22.58, 14.11 (C-13).

A-2: Reaction product of soy oil fatty acid and 1,3-diaminopropane (102)

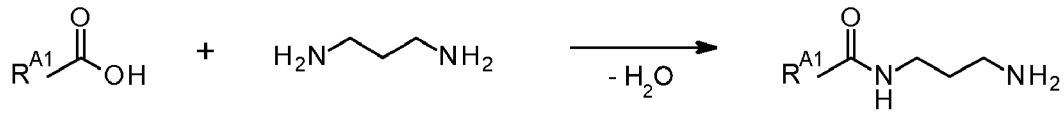


(102)

A stirred solution of distilled soy oil fatty acid (410 g SOFA-1, 1.5 mol, represented by $R^{A1}$-C(=O)OH in the reaction scheme) is heated to 40°C and 1,3-diaminopropane (144 g, 1.95 mol; molar ratio of $R^{A1}$-C(=O)OH to 1,3-diaminopropane is 1 to 1.3) is added in 5 minutes. The addition causes an exothermic reaction due to a salt formation. After complete addition, the reaction mixture is quickly heated until 80 °C and then heated slowly until 180 °C in 1.5 hours. The mixture is kept at reflux at 180 °C for 2.5 hours. Afterwards, water is distilled. Then, the reaction mixture is kept under vacuum for one hour. The acidic index is measured by titration with KOH solution (0.05 mol/L) to identify the end of the reaction by using 50 mL neutralized ethanol as solvent and phenolphthalein as indicator. After all the fatty acid is consumed as determined by a measured acidic index of 0 mg KOH/g, the mixture is cooled to 50 °C. The reaction product (102) is obtained as a yellow brownish solid. In the reaction scheme, N-(3-aminopropyl)amide derivatives are depicted. It is assumed that due to a further intramolecular condensation reaction, the reaction product contains also 2-$R^{A1}$-1,4,5,6-tetrahydropyrimidine derivatives.

A-3: Reaction product of soy oil fatty acid and diethylenetriamine (103)

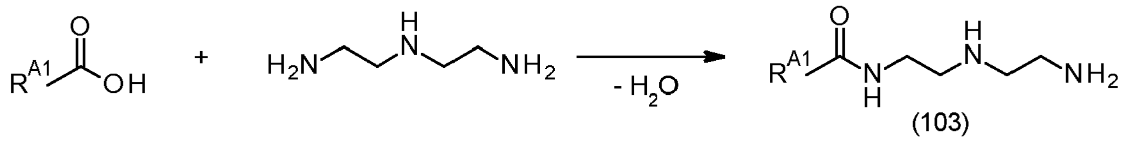


(103)

A stirred solution of distilled soy oil fatty acid (410 g SOFA-1, 1.5 mol, represented by $R^{A1}$-C(=O)OH in the reaction scheme) is heated to 40°C and diethylenetriamine (155 g, 1.5 mol; molar ratio of $R^{A1}$-C(=O)OH to diethylenetriamine is 1 to 1) is added in 5 minutes. The addition causes an exothermic reaction due to a salt formation. After complete addition, the reaction mixture is heated until 80 °C automatically, and then heated slowly until 180 °C in 1.5 hours. The mixture is kept at reflux at 180 °C for two hours and water is distilled. Then, the reaction mixture is kept under vacuum (- 700 mm Hg respectively 93 kPa below atmospheric pressure) for one hour. The acidic index is measured by titration with KOH solution (0.05 mol/L) to identify the end of the reaction by using 50 mL neutralized ethanol as solvent and phenolphthalein as indicator. After all the fatty acid is consumed as determined by a measured acidic index of 0 mg KOH/g, the mixture is cooled to 50 °C. The reaction product (103) is obtained as a yellow brownish solid. In the reaction scheme, N-[2-(2-aminoethylamino)ethyl]amide derivatives are depicted. It is assumed that due to a further intramolecular condensation reaction, the reaction product contains also 2-(2-$R^{A1}$-4,5-dihydroimidazol-1-yl)ethanamine derivatives.

B) non-ionic collector

B-1: oligomeric C12 D-glycopyranoside (201)

An oligomeric lauryl D-glycopyranoside (CAS-No. 110615-47-9, HLB value of 11-14, a degree of polymerization of approximately 1.4) is commercially acquired, for example from Wuhan Fortuna Chemicals and used without further purification.

B-2: oligomeric C8/C10 D-glycopyranoside (202)

An oligomeric octyl/decyl D-glycopyranoside (CAS-No. 68515-73-1, HLB value of 14-14.5, a degree of polymerization of approximately 1.4) is commercially acquired, for example from Sigma Aldrich as Triton CG-110 (TM) and used without further purification.

B-3: [2:5]-mixture of B-1 and B-2 (203)

2 parts by weight of B-1 and 5 parts by weight of B-2 are mixed to obtain B-3.

C) flotation auxiliary

St-1: causticized starch

4 g corn starch and 50 g of distilled water are added in a 600 mL beaker. 1 g of an aqueous 50 wt.% NaOH solution is added and energetically mixed for 10 minutes until it acquires a gel appearance. 345 g of distilled water are added to the mixture and a homogenization is made with a magnetic stirrer for 5 minutes to obtain a solution of causticized starch St-1.

D) collector solution

An aqueous collector solution is prepared by dissolving an amidoamine, i.e. the obtained reaction product, and optionally a non-ionic collector in a relative weight ratio, as stated in table D-1 in water in an amount to obtain a 1 wt.% aqueous collector solution.

Table D-1

| collector solution No. | amidoamine collector | amount [c)] | non-ionic collector | amount [c)] |
|---|---|---|---|---|
| D-1-1 [a)] | (101) | 100 | - | - |
| D-1-2 [b)] | (101) | 90 | (201) | 10 |
| D-1-3 [b)] | (101) | 90 | (203)* *[2 (201) + 5 (202)] | 10 |
| D-1-4 [a)] | (102) | 100 | - | - |
| D-1-5 [b)] | (102) | 90 | (201) | 10 |
| D-1-6 [b)] | (102) | 90 | (202) | 10 |
| D-1-7 [b)] | (102) | 90 | (203)* *[2 (201) + 5 (202)] | 10 |
| D-1-8 [a)] | (103) | 100 | - | - |
| D-1-9 [b)] | (103) | 90 | (201) | 10 |

Footnote: a) comparative
b) inventive
c) parts by weight based on 100 parts by weight of the sum of the amidoamine and if present of the non-ionic collector

E) calculation of selectivity

A measure of selectivity for the valuable mineral and against the gangue can be Separation Efficiency (SE) defined as SE = $R_v$-$R_G$, with $R_v$ being recovery of the valuable element and $R_G$ being the recovery of gangue as described

in "Separation Efficiency" by Norman F. Schulz, Society of Mining Engineers of AIME, pre-print No. 69-B-44, paper to be presented at the Annual Meeting of the American Institute of Mining, Metallurgical and Petroleum Engineers, Washington, D.C., 1969 (available in digitalized form for example at www.911metallurgist.com/separation-efficiency/). The same calculation can be made from element assays of the concentrate and tailings fraction and represented as

$$SE = 100\frac{c_m}{f}\left[\frac{(f-t)(c-f)}{(c-t)(c_m-f)}\right] = 100\frac{f-t}{c-t}\left[\frac{c}{f}-\frac{c_m-c}{c_m-f}\right]$$

where

c: atom content of desired element [wt.%] in the concentrate
$c_m$: atom content of desired element [wt.%] in the mineral being concentrated
f: atom content of desired element [wt.%] in the feed
t: atom content of desired element [wt.%] in the tailings

The value of Separation Efficiency for an ideal separation is 100, however the real values are below that. The closer it is to 100, the better the separation and the recovery of valuable element.

In case of itabirite ore, the desired element is iron (Fe) and the mineral being concentrated is hematite $Fe_2O_3$ with an atom content of iron in the mineral of 69.9%. The gangue in an itabirite ore consists predominantly of quartz ($SiO_2$), which is determined as Si by WDXRF and recalculated as $SiO_2$ in the concentrate. For a calculation of Separation Efficiency, only the iron content of the fraction is used.

F) Flotation

F-1: flotation of an itabirite type iron ore I with a high $SiO_2$ content

500 g ground itabirite type iron ore I (iron mainly contained as hematite, 35.6 wt.% Fe and 47.9 wt.% $SiO_2$) and 333 mL distilled water are placed in a 1.5 L flotation cell in a CDC flotation machine and agitated at 1000 rpm. The slurry is conditioned with causticized starch solution St-1 in an amount corresponding to 500 g starch per ton of dried ore (25 g of a causticized starch solution St-1 with 1 wt.% concentration) for 3 min. The pH is kept at 9.8 using 5 wt.% aqueous NaOH solution. Subsequently, approximately 10 g of 1 wt.% collector solution as described in the table F-1-1 corresponding to approximately 200 g collector per ton of dried ore is added to the slurry and conditioned for 1 min.

After conditioning, further 600 mL distilled water are added and the slurry is aerated at 1 L/min until the completion of the flotation (3 min). The froth fraction is collected and aeration stopped. The water level is maintained during the entire flotation time. The remaining cell fraction (further described as concentrate) and separated froth (further described as tailings) are dried in an oven at 100 °C, weighed, homogenized, and their contents of Fe and Si are determined using EDXRF in a lithium borate fused bead matrix. The Si content is recorded as $SiO_2$. The results are listed in table F-1-1.

Table F-1-1:

| example No. | F-1-1-1 [a)] | F-1-1-2 [b)] | F-1-1-3 [a)] |
|---|---|---|---|
| collector solution | D-1-1 | D-1-2 | D-1-3 |
| collector | (101) | (101)+(201) | (101)+(203)* *[2(201)+5(202)] |
| amount [c)] | 100 | 90:10 | 90:10 |
| dosage [g/t] | 200 | 200 | 200 |
| SE [d)] | 85.2 | 87.4 | 86.3 |
| Fe grade conc. [e)] [wt.%] | 63.0 | 67.3 | 66.3 |
| $SiO_2$ conc. [f)] [wt.%] | 4.01 | 2.34 | 2.77 |
| Fe tailings [g)] [wt.%] | 3.0 | 6.1 | 6.0 |
| $SiO_2$ tailings [h)] [wt.%] | 77.9 | 77.7 | 78.2 |

(continued)

| Fe recovery in conc. [i] [%] | 88.1 | 89.7 | 88.9 |
|---|---|---|---|

Footnotes: a) comparative
b) inventive
c) relative weight parts of amidoamine collector and non-ionic collector based on the sum of 100 parts for the amidoamine collector and - if present - the non-ionic collector
d) Separation Efficiency
e) weight percentage of Fe in the cell concentrate
f) weight percentage of $SiO_2$ in the cell concentrate
g) weight percentage of Fe in the tailings (separated froth)
h) weight percentage of $SiO_2$ in the tailings (separated froth)
i) recovery of Fe in the cell concentrate based on overall Fe in the ore

The results in table F-1-1 show that the use of inventive collector compositions comprising amidoamine collector and non-ionic collector result in an improved separative performance in comparison to a use of the amidoamine collector alone. Concerning a $SiO_2$ content in the concentrate, it is noted that each mine site establishes its commercially acceptable upper limit, for example 2.5-3.0 wt.% $SiO_2$ in the concentrate. The Fe grade conc. values are influenced by the wt.% $SiO_2$ in the concentrate, which means that if the commercially acceptable upper limit of $SiO_2$ content in the concentrate is reached, the Fe recovery is decisive for a performance of a collector.

F-2: flotation of an itabirite type iron ore II with a low $SiO_2$ content

500 g ground itabirite type iron ore II (iron mainly contained as hematite, 53.5 wt.% Fe and 21.3 wt.% $SiO_2$) and 333 mL distilled water are placed in a 1.5 L flotation cell in a CDC flotation machine and agitated at 1000 rpm. The slurry is conditioned with causticized starch solution St-1 in an amount corresponding to 700 g starch per ton of dried ore (35 g of a causticized starch solution St-1 with 1 wt.% concentration) for 3 min. The pH is kept at 9.8 using 5 wt.% aqueous NaOH solution. Subsequently, approximately 7.5 g of 1 wt.% collector solution as described in the table F-2-1 corresponding to approximately 150 g collector per ton of dried ore is added to the slurry and conditioned for 1 min.

After conditioning, further 600 mL distilled water are added and the slurry is aerated at 1 L/min until the completion of the flotation (3 min). The froth fraction is collected and aeration stopped. The water level is maintained during the entire flotation time. The remaining cell fraction (further described as concentrate) and separated froth (further described as tailings) are dried in an oven at 100 °C, weighed, homogenized, and their contents of Fe and Si are determined using EDXRF in a lithium borate fused bead matrix. The Si content is recorded as $SiO_2$. The results are listed in table F-2-1.

Table F-2-1:

| example No. | F-2-1-1 [a)] | F-2-2-2 [b)] | F-2-1-3 [b)] | F-2-1-4 [b)] | F-2-1-5 [a)] | F-2-1-6 [b)] |
|---|---|---|---|---|---|---|
| collector solution | D-1-4 | D-1-5 | D-1-6 | D-1-7 | D-1-8 | D-1-9 |
| collector | (102) | (102)+ (201) | (102)+ (202) | (102)+(203) * *[2 (201)+ 5(202)] | (103) | (103)+ (201) |
| amount [c)] | 100 | 90:10 | 90:10 | 90:10 | 100 | 90:10 |
| dosage [g/t] | 150 | 150 | 150 | 150 | 150 | 150 |
| SE [d)] | 71.8 | 73.7 | 74.2 | 72.9 | 77.0 | 79.0 |
| Fe grade conc. [e)] [wt.%] | 67.0 | 67.3 | 67.1 | 66.8 | 67.3 | 67.7 |
| $SiO_2$ conc. [f)] [wt.%] | 1.56 | 1.26 | 1.76 | 1.42 | 1.15 | 0.91 |
| Fe tailings [g)] [wt.%] | 26.2 | 25.2 | 23.8 | 24.0 | 21.0 | 20.4 |
| $SiO_2$ tailings [h)] [wt.%] | 76.5 | 81.5 | 76.1 | 84.2 | 83.4 | 74.0 |
| Fe recovery in conc. [i)] [%] | 84.0 | 85.0 | 86.1 | 85.9 | 88.8 | 89.1 |

(continued)

| observations | | | j) | | | |
|---|---|---|---|---|---|---|

Footnotes: a) comparative
b) inventive
c) relative weight parts of amidoamine collector and non-ionic collector based on the sum of 100 parts for the amidoamine collector and - if present - the non-ionic collector
d) Separation Efficiency
e) weight percentage of Fe in the cell concentrate
f) weight percentage of $SiO_2$ in the cell concentrate
g) weight percentage of Fe in the tailings (separated froth)
h) weight percentage of $SiO_2$ in the tailings (separated froth)
i) recovery of Fe in the cell concentrate based on overall Fe in the ore
j) higher but still acceptable $SiO_2$ in the concentrate offset by lower Fe losses into tailings and higher Fe recovery

The results in table F-2-1 show that the use of inventive collector compositions comprising amidoamine collector and non-ionic collector result in an improved separative performance in comparison to a use of the amidoamine collector alone. Concerning a $SiO_2$ content in the concentrate, it is noted that each mine site establishes its commercially acceptable upper limit, for example <2 wt.% $SiO_2$ in the concentrate. The Fe grade conc. values are influenced by the wt.% $SiO_2$ in the concentrate, which means that if the commercially acceptable upper limit of $SiO_2$ content in the concentrate is reached, the Fe recovery is decisive for a performance of a collector.

## Claims

**1.** A method for manufacturing a concentrate enriched in iron mineral content from an ore, which contains an iron mineral and silicate, by a reverse flotation, which method comprises the step of
(c) adding a collector composition comprising

(i) an amidoamine, which contains a compound of formula I

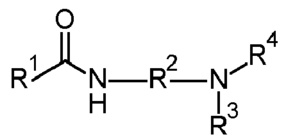 (I),

wherein

$R^1$ is a linear or branched aliphatic $C_7$-$C_{19}$ alkyl or a linear $C_7$-$C_{19}$ aliphatic alkenyl,
$R^2$ is a linear or branched aliphatic $C_2$-$C_6$ alkylene,
$R^3$ and $R^4$ are independently from each other H, $C_1$-$C_2$ alkyl or a substituent of formula I-S

$$*-[-(CH_2-)_p-NH-]_q-(-CH_2-)_p-NH_2 \quad \text{(I-S)},$$

wherein

p is 2, 3 or 4,
q is 0, 1, 2 or 3, and
* represents the connecting site of the substituent, or

a salt of a protonated compound of formula I and an anion, and

(ii) an alkyl polyglycoside, which contains a compound of formula II

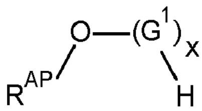 (II),

wherein

$R^{AP}$ is a linear or branched $C_6$-$C_{22}$ alkyl or a linear $C_6$-$C_{22}$ alkenyl,
$G^1$ is a monosaccharide residue having 5 or 6 carbon atoms,
x is an average value from 1 to 10,

to a prepared aqueous pulp of the ore and optionally one or more flotation auxiliary to obtain an aqueous mixture.

**2.** The method according to claim 1, wherein the method comprises the steps of

(a) providing the ore, which contains an iron mineral and silicate,
(b) preparing from the provided ore by addition of water and optionally one or more flotation auxiliaries an aqueous pulp,
(c) adding the collector composition to the prepared aqueous pulp of the ore and optionally one or more flotation auxiliaries to obtain an aqueous mixture,
(d) aerating the aqueous mixture in a flotation cell to generate a froth, which is enriched in silicate content, and removing the generated froth from the flotation cell,
(e) obtaining from the flotation cell the concentrate enriched in iron mineral content.

**3.** The method according to claim 1 or 2, wherein

(i) the amidoamine contains different compounds of formula I, or salts of the protonated different compounds of formula I and an anion, and
(ii) the alkyl polyglycoside contains different compounds of formula II.

**4.** The method according any preceding claim, wherein

(i) the amidoamine is obtainable by condensation of a fatty acid of formula I-FA with an amine of formula I-A

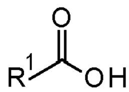 (I-FA)

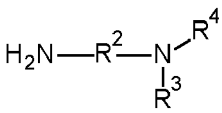 (I-A),

wherein $R^1$, $R^2$, $R^3$, $R^4$ and formula I-S, p, q and * are defined as in claim 1.

**5.** The method according to any preceding claim, wherein
(ii) the alkyl polyglycoside is obtainable by glycosylation of one equivalent of an alcohol of the formula II-AL

$R^{AP}$-OH (II-AL),

wherein $R^{AP}$ is defined as in claim 1, with a glycose of the formula II-MS

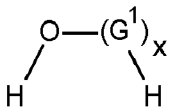 (II-MS),

wherein $G^1$ and x are defined as in claim 1.

**6.** The method according to any preceding claim, wherein the collector composition comprises

(i) an amidoamine, which contains a compound of formula I

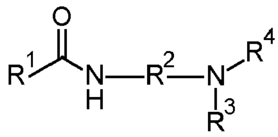 (I),

wherein

$R^1$ is a linear or branched aliphatic $C_{11}$-$C_{19}$ alkyl or a linear $C_{11}$-$C_{19}$ aliphatic alkenyl,
$R^2$ is a linear or branched aliphatic $C_2$-$C_6$ alkylene,
$R^3$ and $R^4$ are independently from each other H, $C_1$-$C_2$ alkyl or a substituent of formula I-S

$$*\text{-}[\text{-}(CH_2\text{-})_p\text{-}NH\text{-}]_q\text{-}(\text{-}CH_2\text{-})_p\text{-}NH_2 \qquad \text{(I-S)}$$

wherein

p is 2, 3 or 4,
q is 0, 1, 2 or 3, and
* represents the connecting site of the substituent, or

a salt of a protonated compound of formula I and an anion, and
which is obtainable by condensation of a fatty acid of formula I-FA with an amine of formula I-A

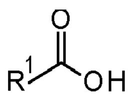 (I-FA)

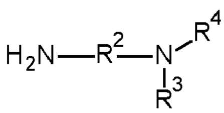 (I-A)

,

and

(ii) an alkyl polyglycoside, which contains a compound of formula II

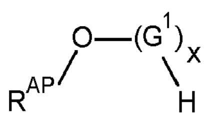 (II),

wherein

$R^{AP}$ is a linear or branched $C_6$-$C_{22}$ alkyl or a linear $C_6$-$C_{22}$ alkenyl,
$G^1$ is a monosaccharide residue having 5 or 6 carbon atoms,
x is an average value from 1 to 10, and
which is obtainable by glycosylation of one equivalent of an alcohol of the formula II-AL

$$R^{AP}\text{-OH} \qquad \text{(II-AL)},$$

with a glycose of the formula II-MS

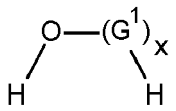 (II-MS)

.

**7.** The method according to any preceding claim, wherein the collector composition comprises

(i) 65 to 99 parts by weight of the amidoamine, and
(ii) 1 to 35 parts by weight of the alkyl polyglycoside,

and the sum of the amidoamine and the alkyl polyglycoside is 100 parts by weight.

**8.** The method according to any preceding claim, wherein $R^3$ is H or $C_1$-$C_2$ alkyl.

**9.** The method according to any preceding claim, wherein p is 2 and q is 1, 2 or 3.

**10.** The method according to any preceding claim, wherein $G^1$ is glucose, xylose or a mixture thereof.

**11.** The method according to any preceding claim, wherein x is in the range from 1.0 to 3.0.

**12.** The method according to any preceding claim, wherein $R^{AP}$ is a linear or branched $C_8$-$C_{18}$ alkyl or a linear $C_{18}$ alkenyl.

**13.** The method according to claim 12, wherein $R^{AP}$ is a linear or branched $C_8$ alkyl, a linear or branched $C_{10}$ alkyl, a linear or branched $C_{12}$ alkyl or a branched $C_{13}$ alkyl.

**14.** The method according to any preceding claim, wherein the anion is $C_1$-$C_{18}$ carboxylate, fluoride, chloride, bromide, iodide, sulfonate, hydrogensulfate, sulfate, dihydrogenphosphate, hydrogenphosphate, phosphate, nitrate, hydrofluorosilicate or fluorosilicate.

**15.** The method according to any preceding claim, wherein the collector composition is added in an amount between 10 g to 500 g per ton of the ore.

**16.** The method according to any preceding claim, wherein the pH value at step (c) is between 8 and 12.

**17.** The method according to any preceding claim, wherein the collector composition is added as an aqueous solution or suspension.

**18.** The method according to any preceding claim, wherein at step (b) one or more flotation auxiliary is added and one of the flotation auxiliary is a depressing agent, a froth regulator, a co-collector or an extender oil.

**19.** The method according to claim 18, wherein a depressing agent, which is starch, is added.

**20.** Use of a collector composition as defined in claim 1 as a flotation collector for manufacturing a concentrate enriched in iron mineral content from an ore, which contains an iron mineral and silicate, by a reverse flotation.

**21.** A collector composition, comprising

(i) an amidoamine, which contains a compound of formula I

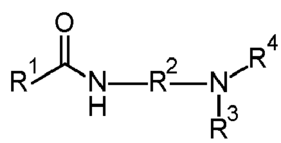 (I)

wherein

$R^1$ is a linear or branched aliphatic $C_7$-$C_{19}$ alkyl or a linear $C_7$-$C_{19}$ aliphatic alkenyl,
$R^2$ is a linear or branched aliphatic $C_2$-$C_6$ alkylene,
$R^3$ and $R^4$ are independently from each other H, $C_1$-$C_2$ alkyl or a substituent of formula I-S

$$*\text{-}[\text{-}(CH_2\text{-})_p\text{-}NH\text{-}]_q\text{-}(\text{-}CH_2\text{-})_p\text{-}NH_2 \quad \text{(I-S)}$$

wherein

p is 2, 3 or 4,
q is 0, 1, 2 or 3, and
* represents the connecting site of the substituent, or

a salt of a protonated compound of formula I and an anion, and

(ii) an alkyl polyglycoside, which contains a compound of formula II

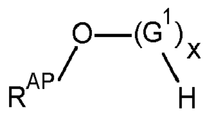 (II),

wherein

$R^{AP}$ is a linear or branched $C_6$-$C_{22}$ alkyl or a linear $C_6$-$C_{22}$ alkenyl,
$G^1$ is a monosaccharide residue having 5 or 6 carbon atoms,
x is an average value from 1 to 10.

Europäisches Patentamt
European Patent Office
Office européen des brevets

# EUROPEAN SEARCH REPORT

Application Number
EP 21 15 1244

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2014/144290 A1 (MARTINS LUIZ HENRIQUE [BR]) 29 May 2014 (2014-05-29)<br>* claims *<br>----- | 1-20 | INV.<br>B03D1/008<br>B03D1/01<br>B03D1/016 |
| A | GB 2 197 226 A (HENKEL KGAA)<br>18 May 1988 (1988-05-18)<br>* claims *<br>----- | 1-20 | |
| A | US 5 108 585 A (VON RYBINSKI WOLFGANG [DE] ET AL) 28 April 1992 (1992-04-28)<br>* claims *<br>----- | 1-20 | |
| X | US 2019/365619 A1 (CEBALLOS MA ANGELLICA MANGABAN [US] ET AL)<br>5 December 2019 (2019-12-05)<br>* paragraph [0259] *<br>----- | 21 | |

TECHNICAL FIELDS SEARCHED (IPC)

B03D

The present search report has been drawn up for all claims

1

| Place of search | Date of completion of the search | Examiner |
|---|---|---|
| Munich | 24 June 2021 | Kleiminger, Lisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 15 1244

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2021

| Patent document cited in search report | Publication date | Patent family member(s) | Publication date |
|---|---|---|---|
| US 2014144290 A1 | 29-05-2014 | AU 2013352266 A1 | 11-06-2015 |
| | | BR 112015012316 A2 | 11-07-2017 |
| | | CA 2892741 A1 | 05-06-2014 |
| | | CL 2015001447 A1 | 18-12-2015 |
| | | CN 104919062 A | 16-09-2015 |
| | | PE 20151058 A1 | 09-08-2015 |
| | | US 2014144290 A1 | 29-05-2014 |
| | | WO 2014085533 A1 | 05-06-2014 |
| GB 2197226 A | 18-05-1988 | BR 8705660 A | 31-05-1988 |
| | | CN 87107119 A | 15-06-1988 |
| | | DE 3636530 A1 | 28-04-1988 |
| | | GB 2197226 A | 18-05-1988 |
| | | ZA 878024 B | 27-04-1988 |
| US 5108585 A | 28-04-1992 | AT 72774 T | 15-03-1992 |
| | | AU 582021 B2 | 09-03-1989 |
| | | BR 8605066 A | 21-07-1987 |
| | | CA 1321846 C | 31-08-1993 |
| | | DD 254144 A5 | 17-02-1988 |
| | | DE 3536975 A1 | 23-04-1987 |
| | | EP 0219057 A2 | 22-04-1987 |
| | | ES 2002423 A6 | 01-08-1988 |
| | | FI 864181 A | 18-04-1987 |
| | | IN 167321 B | 06-10-1990 |
| | | TR 23700 A | 29-06-1990 |
| | | US 5108585 A | 28-04-1992 |
| | | ZA 867857 B | 27-05-1987 |
| US 2019365619 A1 | 05-12-2019 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2278060 A
- US 4301004 A
- DE 19703360 A1
- WO 2011083136 A1
- US 2014048454 A1
- US 2014048453 A1
- US 2014144290 A1
- US 20150096925 A1
- WO 2016041916 A1
- WO 2016065189 A1
- CN 106622677 A
- WO 2019113082 A1
- EP 2020069040 W


### Non-patent literature cited in the description


- *CHEMICAL ABSTRACTS,* 85408-42-0
- *CHEMICAL ABSTRACTS,* 68650-79-3
- *CHEMICAL ABSTRACTS,* 97552-95-9
- *CHEMICAL ABSTRACTS,* 61790-85-0
- *CHEMICAL ABSTRACTS,* 68188-30-7
- *CHEMICAL ABSTRACTS,* 39669-97-1
- *CHEMICAL ABSTRACTS,* 151190-60-2
- *CHEMICAL ABSTRACTS,* 220820-88-2
- *CHEMICAL ABSTRACTS,* 83763-68-2
- *CHEMICAL ABSTRACTS,* 7651-02-7
- *CHEMICAL ABSTRACTS,* 83607-13-0
- *CHEMICAL ABSTRACTS,* 127358-77-4
- *CHEMICAL ABSTRACTS,* 13282-70-7
- *CHEMICAL ABSTRACTS,* 109-28-4
- *CHEMICAL ABSTRACTS,* 76959-11-0
- *CHEMICAL ABSTRACTS,* 70715-14-9
- *CHEMICAL ABSTRACTS,* 13282-68-3
- *CHEMICAL ABSTRACTS,* 1638206-65-1
- *CHEMICAL ABSTRACTS,* 81613-56-1
- *CHEMICAL ABSTRACTS,* 651294-42-7
- *CHEMICAL ABSTRACTS,* 187939-51-1
- *CHEMICAL ABSTRACTS,* 122955-03-7
- **W. VON RYBINSKI ; K. HILL.** Alkyl Polyglycosides - Properties and Applications of a new Class of Surfactants. *Angewandte Chemie. Int. Ed.,* 1998, vol. 37, 1327-1345
- *CHEMICAL ABSTRACTS,* 110615-47-9
- *CHEMICAL ABSTRACTS,* 68515-73-1
- Separation Efficiency. **NORMAN F. SCHULZ.** Society of Mining Engineers of AIME. Annual Meeting of the American Institute of Mining, Metallurgical and Petroleum Engineers, 1969